# EUROPEAN PATENT APPLICATION

(11) **EP 2 599 811 A1**
(43) Date of publication of application: **05.06.2013**
(21) Application number: 12194569.5
(22) Date of filing: 28.11.2012
(51) Int. Cl.: C08G 18/44, C08G 18/66, C08G 18/67, C08G 18/76, C08G 18/81, B41C 1/05, B41M 5/24, B41N 1/12

(54) **Resin composition for laser engraving, flexographic printing plate precursor for laser engraving and process for producing same, and flexographic printing plate and process for making same**

(30) Priority: 29.11.2011 JP 2011260126
(71) Applicant: Fujifilm Corporation, Minato-ku Tokyo (JP)
(72) Inventor: Yoshida, Kenta, Shizuoka (JP)
(74) Representative: HOFFMANN EITLE

(57) **Abstract**

Disclosed is a resin composition for laser engraving, comprising (Component A) a polyurethane resin that is a plastomer at 20°C and has an ethylenically unsaturated group in a main chain and a side chain and (Component B) a polymerization initiator. Also disclosed is a flexographic printing plate precursor for laser engraving, comprising a relief-forming layer comprising the above-described resin composition.

## Description

The present invention relates to a resin composition for laser engraving, a flexographic printing plate precursor for laser engraving and a process for producing the same, a flexographic printing plate and a process for making the same.

A large number of so-called "direct engraving CTP methods", in which a relief-forming layer is directly engraved by means of a laser are proposed. In the method, a laser light is directly irradiated to a flexographic printing plate precursor to cause thermal decomposition and volatilization by photothermal conversion, thereby forming a concave part in a relief-forming layer. Differing from a relief formation using an original image film, the direct engraving CTP method can control freely relief shapes. Consequently, when such image as an outline character is to be formed, it is also possible to engrave that region deeper than other regions, or, in the case of a fine halftone dot image, it is possible, taking into consideration resistance to printing pressure, to engrave while adding a shoulder. With regard to the laser for use in the method, a high-power carbon dioxide laser is generally used. In the case of the carbon dioxide laser, all organic compounds can absorb the irradiation energy and convert it into heat. On the other hand, inexpensive and small-sized semiconductor lasers have been developed, wherein, since they emit visible lights and near infrared lights, it is necessary to absorb the laser light and convert it into heat.

As a resin composition for laser engraving, those described in Japanese Registered Patent No. 2846954, JP-A-2004-262136 or JP-T-2011-510839 are known. JP-A denotes a Japanese unexamined patent application publication and JP-T denotes a published Japanese translation of a PCT application.

It is an object of the present invention to provide a resin composition for laser engraving that has high laser engraving sensitivity and can give a flexographic printing plate having excellent printing durability, a flexographic printing plate precursor and a process for producing same employing the resin composition for laser engraving, and a process for making a flexographic printing plate employing the flexographic printing plate precursor and a flexographic printing plate obtained thereby.

The above-mentioned object of the present invention has been attained by solution means <1>, <11>, <13>, <15> to <17>, <18>, and <19> below. They are described below together with <2> to <10>, <12>, and <14>, which are preferred embodiments.
<1> A resin composition for laser engraving, comprising (Component A) a polyurethane resin that is a plastomer at 20°C and has an ethylenically unsaturated group in a main chain and a side chain and (Component B) a polymerization initiator,
<2> the resin composition for laser engraving according to <1> above, wherein Component A has an ethylenically unsaturated group at a side chain terminal,
<3> the resin composition for laser engraving according to <1> or <2>, wherein Component A is a polyurethane resin obtained by a polyaddition reaction between (Component A-b) a diisocyanate compound and a diol selected from the group consisting of (Component A-a) a divalent or trivalent diol having no ethylenically unsaturated group, (Component A-c) a diol compound having an ethylenically unsaturated group at a molecular terminal, and (Component A-d) a diol compound having an ethylenically unsaturated group in the molecule and a hydroxy group at both molecular termini,
<4> the resin composition for laser engraving according to <3>, wherein Component A-a is a polycarbonate diol,
<5> the resin composition for laser engraving according to <3>, wherein Component A-c is Formula (a-c1) and/or Formula (a-c2), 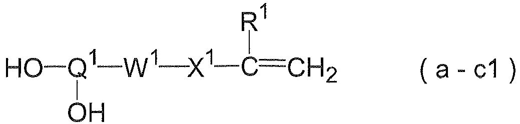 wherein in Formula (a-c1), R¹ denotes a hydrogen atom or a methyl group, X¹ denotes a single bond, a carbonyl group, an ester bond (-OC(O)-*), or an amide bond (-NHC(O)-*), W¹ denotes a divalent linking group selected from the group consisting of a single bond, an ether bond, an oxyalkylene group having 1 to 10 carbons, an alkylene group having 1 to 10 carbons, and an arylene group having 6 to 10 carbons, Q¹ denotes a trivalent linking group that is an aliphatic hydrocarbon group having 3 to 10 carbons, may be straight chain or branched, has one hydroxy group on each of at least two different carbon atoms, and has one single bond, and * denotes the position of bonding to the carbon atom of the ethylenically unsaturated group, 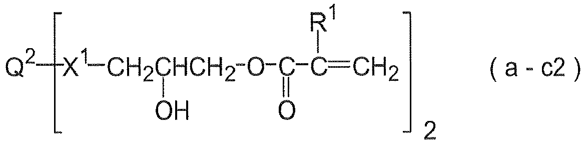 wherein in Formula (a-c2), R¹ denotes a hydrogen atom or a methyl group, X¹ denotes a single bond, a carbonyl group, an ester bond (-OC(O)-*), an ether bond (-O-), or an amide bond (-NHC(O)-*), * denotes a part bonding to Q², and Q² denotes a divalent organic residue having 3 to 30 carbons,
<6> the resin composition for laser engraving according to <3>, wherein Component A-d is an alkenylene-α,ω-diol,
<7> the resin composition for laser engraving according to <3>, wherein Component A-b is an aromatic diisocyanate,
<8> the resin composition for laser engraving according to any one of <1> to <7>, wherein it further comprises (Component C) a (meth)acrylate compound,
<9> the resin composition for laser engraving according to <8>, wherein Component C is an organic compound having a number-average molecular weight of less than 1,000 and having at least one to eight (meth)acryloyl groups per molecule,
<10> the resin composition for laser engraving according to any one of <1> to <9>, wherein it further comprises (Component D) a photothermal conversion agent,
<11> a flexographic printing plate precursor for laser engraving, comprising a relief-forming layer comprising the resin composition for laser engraving according to any one of <1> to <10>,
<12> a flexographic printing plate precursor for laser engraving, comprising a crosslinked relief-forming layer formed by crosslinking by means of light and/or heat a relief-forming layer comprising the resin composition for laser engraving according to any one of <1> to <10>,
<13> a process for producing a flexographic printing plate precursor for laser engraving, comprising a layer formation step of forming a relief-forming layer comprising the resin composition for laser engraving according to any one of <1> to <10> and a crosslinking step of crosslinking the relief-forming layer by means of light and/or heat to thus obtain a flexographic printing plate precursor comprising a crosslinked relief-forming layer,
<14> the process for producing a flexographic printing plate precursor for laser engraving according to <13>, wherein the crosslinking step is a step of crosslinking the relief-forming layer comprising the resin composition for laser engraving by means of heat to thus obtain a flexographic printing plate precursor comprising a crosslinked relief-forming layer,
<15> a process for making a flexographic printing plate, comprising an engraving step of laser-engraving the flexographic printing plate precursor according to <12> to thus form a relief layer,
<16> a flexographic printing plate comprising a relief layer made by the process for making a flexographic printing plate according to <15>,
<17> a process for making a flexographic printing plate, comprising a step of preparing a flexographic printing plate precursor comprising a coating step (1) of applying a resin composition comprising (Component A) a polyurethane resin that is a plastomer at 20°C and has an ethylenically unsaturated group in a main chain and a side chain and (Component B) a polymerization initiator onto a support by coating and a curing step (2) of thermally curing the composition, and a step of laser-engraving the flexographic printing plate precursor,
<18> use for laser engraving of the resin composition for laser engraving according to any one of <1> to <10>, and
<19> use for laser engraving of the flexographic printing plate precursor for laser engraving according to <11> or <12>.

The present invention is explained in detail below.

In the present invention, the notation 'lower limit to upper limit' expressing a numerical range means 'at least the lower limit but no greater than the upper limit', and the notation 'upper limit to lower limit' means 'no greater than the upper limit but at least the lower limit'. That is, they are numerical ranges that include the upper limit and the lower limit. Further, "(Component A) Polyurethane resin that is plastomer at 20°C and has ethylenically unsaturated group in main chain and side chain" etc. are simply called as "Component A" etc.

### (Resin composition for laser engraving)

The resin composition for laser engraving (hereinafter, also called simply a 'resin composition') of the present invention comprises (Component A) a polyurethane resin that is a plastomer at 20°C and has an ethylenically unsaturated group in a main chain and a side chain and (Component B) a polymerization initiator. Due to the resin composition for laser engraving of the present invention comprising Component A and Component B, there can be provided a printing plate precursor for laser engraving having high laser engraving sensitivity that can give a flexographic printing plate having excellent printing durability.

The resin composition for laser engraving of the present invention may widely be applied to other applications without particular limitations, in addition to the application of the relief-forming layer of a flexographic printing plate precursor to be subjected to laser engraving. For example, it may be applied not only to the relief-forming layer of a printing plate precursor that is subjected to raised relief formation by laser engraving, which will be described in detail below, but also to the formation of other products in which asperities or openings are formed on the surface, for example, various printing plates and various formed bodies in which images are formed by laser engraving such as an intaglio plate, a stencil plate and a stamp.

Among them, a preferred embodiment is use in formation of a relief-forming layer provided above an appropriate support.

In the present specification, when a flexographic printing plate precursor is explained, a layer that comprises Component A and Component B, that serves as an image-forming layer subjected to laser engraving, that has a flat surface, and that is an uncrosslinked crosslinkable layer is called a relief-forming layer, a layer that is formed by crosslinking the relief-forming layer is called a crosslinked relief-forming layer, and a layer that has asperities formed on the surface by laser engraving the crosslinked relief-forming layer is called a relief layer.

Constituent components of the resin composition for laser engraving are explained below.

### (Component A) Polyurethane resin that is plastomer at 20°C and has ethylenically unsaturated group in main chain and side chain

The resin composition for laser engraving of the present invention comprises (Component A) a polyurethane resin that is a plastomer at 20°C and has an ethylenically unsaturated group in a main chain and a side chain (hereinafter, also called simply a 'specific plastomer').

The 'plastomer' in the present invention means a polymer having the property of easily undergoing deformation by flowing when heated and being able to be solidified in the deformed shape by cooling, as described in 'New Polymer Dictionary' Ed. by the Society of Polymer Science, Japan (Published in 1988, Asakura Publishing Co., Ltd., Japan). The term plastomer is the opposite of an elastomer (having the property, when an external force is applied, of deforming in response to the external force and, when the external force is removed, recovering to the original shape in a short time); a plastomer does not exhibit elastic deformation as with an elastomer, but easily undergoes plastic deformation.

In the present invention, a plastomer means that, when the original dimensions are 100%, it can be deformed up to 200% by means of a small external force at room temperature (20°C) and will not return to 130% or below even if the external force is removed. In further detail, it means a polymer that can be stretched to twice the distance between pre-stretch reference lines on an I-shaped test piece in a tensile test at 20°C in accordance with a tensile set test of JIS K 6262-1997 and that has a tensile set of at least 30% when 5 minutes has elapsed after removing the external tensile force after a stretched state of twice the distance between pre-stretch reference lines is held for 5 minutes. In the case of a polymer for which the above-mentioned measurement cannot be carried out, a polymer that deforms even when an external force is not applied and does not return to its original shape corresponds to a plastomer, and examples that correspond to this include resins in a syrup form, an oil form, and a liquid form. Furthermore, the plastomer of the present invention has a polymer glass transition temperature (Tg) of less than 20°C. In the case of a polymer having two or more Tgs, all of the Tgs are less than 20°C.

The viscosity at 20°C of Component A is preferably 10 Pa·s to 10 kPa·s, and more preferably 50 Pa·s to 5 kPa·s. When the viscosity is in this range, it is easy to mold the resin composition into a sheet-shaped or cylindrical printing plate precursor, and the molding process is also easy. In the present invention, due to Component A being a plastomer, when molding a printing plate precursor for laser engraving obtained therefrom into a sheet shape or a cylindrical shape, good thickness precision and dimensional precision can be achieved.

Component A is a polyurethane resin having an ethylenically unsaturated group in a main chain and a side chain. Preferred examples of Component A include (Component A-1) a polyurethane resin having an ethylenically unsaturated group in a main chain and at a side chain terminal and (Component A-2) a polyurethane resin having an ethylenically unsaturated group in a main chain and in the interior of a side chain.

'Side chain terminal' and 'in the interior of a side chain ' are defined later.

It is surmised that due the printing plate precursor for laser engraving of the present invention employing as a binder resin (binder resin) a polyurethane resin that is a plastomer at 20°C and has an ethylenically unsaturated group in a main chain and a side chain, in a step of crosslinking a printing plate precursor for laser engraving, the binder resin is fixed strongly by covalent bonds thus giving a crosslinked relief-forming layer, and the printing durability of the flexographic printing plate obtained after laser engraving improves.

In the polyurethane resin used in the present invention, the 'main chain' means the longest bonded chain, among chains, containing a urethane bond in a polymer compound molecule forming the resin, and the 'side chain', which may contain a heteroatom, means a carbon chain branching from the main chain.

In the present invention, the 'side chain terminal' means the carbon atom in the 'side chain' that is the furthest from the main chain, and the ethylenically unsaturated group at a side chain terminal means a double bond between the above carbon atom and the carbon atom adjacent thereto on the main chain side.

Furthermore, in the present invention, 'in the interior of a side chain' means the position of a carbon atom in a 'side chain' other than the carbon atom at the side chain terminal, and the ethylenically unsaturated group in the interior of a side chain means a double bond between carbon atoms other than the carbon atom in the side chain that is the furthest from the main chain.

From the viewpoint of engraving sensitivity and printing durability, the number of ethylenically unsaturated groups per molecule of the specific plastomer is preferably at least five on average per polymer molecule, and more preferably at least 7.

The number of ethylenically unsaturated groups contained in the specific plastomer may be determined by molecular weight measurement and iodine value measurement such as the Wijs method or the Hanus method.

The content of the ethylenically unsaturated group is preferably 0.3 mmol/g to 3 mmol/g in the specific plastomer, more preferably 0.4 mmol/g to 2.5 mmol/g, and particularly preferably 0.5 mmol/g to 2 mmol/g.

When formation is carried out by a polyaddition reaction as for the polyurethane resin used in the present invention, there is the advantage that any amount of ethylenically unsaturated groups may easily be introduced into the side chain and the main chain of the polyurethane resin by synthesis using a starting material having an ethylenically unsaturated group.

Component A-1 and Component A-2 are explained in detail below.

### (Component A-1) Polyurethane resin having ethylenically unsaturated group at side chain terminal and in main chain

In the present invention, Component A may preferably employ (Component A-1) a polyurethane resin having an ethylenically unsaturated group at a side chain terminal and in a main chain.

Preferred examples of Component A-1 include (Component A-1-1) a polyurethane resin having an ethylenically unsaturated group at a side chain terminal and in the interior of a main chain and (Component A-1-2) a polyurethane resin having an ethylenically unsaturated group at a side chain terminal and at a main chain terminal.

In the present invention, the 'main chain terminal' means the position of a carbon atom at either terminal of the main chain of the polyurethane resin, and the ethylenically unsaturated group at a main chain terminal means a double bond between the carbon atom at the main chain terminal and the carbon atom adjacent to the above carbon.

In the present invention, 'in the interior of a main chain' means the position of a carbon atom other than the carbon atom at either terminal of the main chain of the polyurethane resin, and the ethylenically unsaturated group in the interior of the main chain means a double bond between carbon atoms other than the carbon atom at the main chain terminal.

Component A-1-1 and Component A-1-2 are explained in detail below.

### (Component A-1-1) Polyurethane resin having ethylenically unsaturated group at side chain terminal and in interior of main chain

The resin composition of the present invention preferably comprises (Component A-1-1) a polyurethane resin having an ethylenically unsaturated group at a side chain terminal and in the interior of a main chain.

The polyurethane resin that is the main chain part of Component A-1 may preferably be formed by a polyaddition reaction of at least one type of polyhydric alcohol compound (Component A-a) (hereinafter, also called a polyol compound) and at least one type of polyisocyanate compound (Component A-b). By further incorporating as some of the reaction species of the polyaddition reaction (Component A-c) a diol compound having an ethylenically unsaturated group at a molecular terminal and (Component A-d) a diol compound having an ethylenically unsaturated group in the molecule and a hydroxy group at both molecular termini in the polyaddition reaction, an ethylenically unsaturated group may be introduced at a side chain terminal and in the interior of a main chain of the specific plastomer of Component A-1-1.

Component A-a to Component A-d are explained below.

The polyhydric alcohol compound (Component A-a) used in the present invention is now explained.

The polyhydric alcohol compound used in the present invention is an alcohol compound having at least two hydroxy groups per molecule. As the polyhydric alcohol compound, a divalent alcohol or a trivalent alcohol is preferably used.

Examples of polyhydric alcohol compounds that are preferably used include a diol having 3 to 50 carbons, and include in detail ethylene glycol, aliphatic diols such as diethylene glycol, triethylene glycol, propylene glycol, 1,3-propanediol, 2-methyl-1,3-propanediol, 2,2-diethyl-1,3-propanediol, 1,3-butanediol, 1,4-butanediol, 2-methyl-1,4-butanediol, neopentyl glycol, 1,5-pentanediol, 3-methyl-1,5-pentanediol, 1,6-hexanediol, 1,7-heptanediol, 1,8-octanediol, 2-methyl-1,8-octanediol, 2,7-dimethyl-1,8-octanediol, 1,9-nonanediol, 2-methyl-1,9-nonanediol, 2,8-dimethyl-1,9-nonanediol, and 1,10-decanediol; alicyclic diols such as 1,4-cyclohexanediol, cyclohexanedimethanol, and cyclooctanedimethanol; aromatic diols such as 1,4-bis(p-hydroxyethoxy)benzene; and polyhydric alcohols having 3 to 10 carbons and at least three hydroxy groups per molecule such as trimethylolpropane, trimethylolethane, glycerol, 1,2,6-hexanetriol, pentaerythritol, and diglycerol.

Furthermore, as a polyhydric alcohol that is more preferably used in the present invention, a polycarbonate polyol can be cited.

Examples of the polycarbonate polyol include those obtained by a reaction between a polyol component and a carbonate compound such as a dialkyl carbonate, an alkylene carbonate, or a diaryl carbonate.

As the polyol component forming the polycarbonate polyol, those usually used in the production of a polycarbonate polyol and the above-mentioned polyhydric alcohol compounds can preferably be cited.

When producing the polycarbonate polyol, with regard to these polyol components, one type thereof may be used or two or more types may be used in combination.

Among these, for the production of a polycarbonate polyol, it is preferable to use an aliphatic diol having 3 to 50 carbon atoms and having a methyl group as a side chain, such as 2-methyl-1,4-butanediol, 3-methyl-1,5-pentanediol, 2-methyl-1,8-octanediol, 2,7-dimethyl-1,8-octanediol, 2-methyl-1,9-nonanediol, or 2,8-dimethyl-1,9-nonanediol, as the polyol component.

Furthermore, examples of the dialkyl carbonate include dimethyl carbonate and diethyl carbonate, and examples of the alkylene carbonate include ethylene carbonate. Examples of the diaryl carbonate include diphenyl carbonate.

The polycarbonate polyol is preferably a polycarbonate diol, and more preferably a polycarbonate diol represented by Formula (1) below. 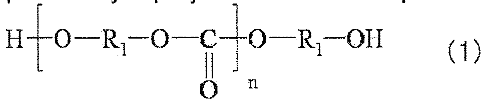 wherein in Formula (1), the R₁s independently denote a divalent straight-chain, branched, and/or cyclic hydrocarbon group having 3 to 50 carbons, which may contain an oxygen atom, etc. (at least one type of atom selected from the group consisting of nitrogen, sulfur, and oxygen) in a carbon skeleton, and R₁ may be a single component or may comprise a plurality of components. n is preferably an integer of 1 to 500.

The 'hydrocarbon group' in R₁ is a saturated or unsaturated hydrocarbon group.

The 'carbon skeleton' in R₁ means a structural part having 3 to 50 carbons forming the hydrocarbon group, and the term 'which may contain an oxygen atom, etc. in a carbon skeleton' means a structure in which an oxygen atom, etc. is inserted into a carbon-carbon bond of a main chain or a side chain. Furthermore, it may be a substituent having an oxygen atom, etc., bonded to a carbon atom in a main chain or a side chain.

R₁ in the polycarbonate diol of Formula (1) may be introduced from a diol compound represented by Formula (1-a) below preferably used as a starting material for synthesis of the polycarbonate diol.

HO-R₁-OH (1-a)

Preferred examples of the diol compound include the straight-chain aliphatic diols, branched aliphatic diols, and cyclic aliphatic diols below.

Examples of the straight-chain aliphatic diol include a straight-chain aliphatic diol having 3 to 50 carbons such as 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,16-hexadecanediol, or 1,20-eicosanediol.

Examples of the branched aliphatic diol include a branched aliphatic diol having 3 to 30 carbons such as 2-methyl-1,3-propanediol, 2-ethyl-1,3-propanediol, neopentyl glycol, 2,2-diethyl-1,3-propanediol, 2-methyl-2-propyl-1,3-propanediol, 2-butyl-2-ethyl-1,3-propanediol, 2,2-dibutyl-1,3-propanediol, 1,2-butanediol, 2-ethyl-1,4-butanediol, 2-isopropyl-1,4-butanediol, 2,3-dimethyl-1,4-butanediol, 2,3-diethyl-1,4-butanediol, 3,3-dimethyl-1,2-butanediol, pinacol, 1,2-pentanediol, 1,3-pentanediol, 2,3-pentanediol, 2-methyl-2,4-pentanediol, 3-methyl-1,5-pentanediol, 2-ethyl-1,5-pentanediol, 3-ethyl-1,5-pentanediol, 2-isopropyl-1,5-pentanediol, 3-isopropyl-1,5-pentanediol, 2,4-dimethyl-1,5-pentanediol, 2,4-diethyl-1,5-pentanediol, 2,3-dimethyl-1,5-pentanediol, 2,2,3-trimethyl-1,3-pentanediol, 1,2-hexanediol, 1,3-hexanediol, 1,4-hexanediol, 2,5-hexanediol, 2-ethyl-1,6-hexanediol, 2-ethyl-1,3-hexanediol, 2-isopropyl-1,6-hexanediol, 2,4-diethyl-1,6-hexanediol, 2,5-dimethyl-2,5-hexanediol, 2-methyl-1,8-octanediol, 2-ethyl-1,8-octanediol, 2,6-dimethyl-1,8-octanediol, 1,2-decanediol, or 8,13-dimethyl-1,20-eicosanediol.

Examples of the cyclic aliphatic diol include a cyclic aliphatic diol having 3 to 30 carbons such as 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, *m*-xylene-α,α'-diol, *p*-xylene-α,α'-diol, 2,2-bis(4-hydroxycyclohexyl)propane, 2,2-bis(4-hydroxyphenyl)propane, or dimer diol.

Examples of the polyhydric alcohol that is preferably used in order to introduce a hydrocarbon group containing at least one type of atom selected from the group consisting of nitrogen, sulfur, and oxygen in R₁ include diethylene glycol, triethylene glycol, tetraethylene glycol, glycerol, 1,2,6-hexanetriol, trimethylolethane, trimethylolpropane, pentaerythritol, dihydroxyacetone, 1,4:3,6-dianhydroglucitol, diethanolamine, *N-*methyldiethanolamine, dihydroxyethylacetamide, 2,2'-dithiodiethanol, and 2,5-dihydroxy-1,4-dithiane.

With regard to R₁ as a hydrocarbon group having at least one type of atom selected from the group consisting of nitrogen, sulfur, and oxygen, from the viewpoint of solvent resistance R₁ preferably comprises at least one ether bond, and from the viewpoint of solvent resistance and durability R₁ is preferably a diethylene glycol-derived group (group represented by -(CH₂)₂-O-(CH₂)₂-). Preferred examples of R₁ include a group represented by Formula (2) below.

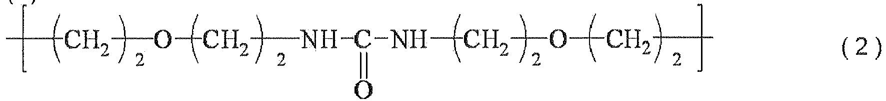

The polycarbonate diol may be produced by for example a conventionally known method as described in JP-B-5-29648 (JP-B denotes a Japanese examined patent application publication), and specifically it may be produced by an ester exchange reaction between a diol and a carbonic acid ester.

Examples of commercially available polycarbonate diols include the product name 'PLACCEL CD205PL', the product name 'PLACCEL CD210PL', and the product name 'PLACCEL CD220PL' (all manufactured by Daicel Chemical Industries, Ltd.), 'PCDL T5652' and 'PCDL L4672' (both manufactured by Asahi Kasei), and 'UM-CARB90 (1/1)' (Ube Industries, Ltd.).

In the present invention, with regard to the polycarbonate diol, one type or two or more types may be used according to the intended purpose, but it is desirable to use one type of polycarbonate diol.

The number-average molecular weight of these polycarbonate diols is preferably in the range of 1,000 to 200,000, more preferably in the range of 1,500 to 10,000, and yet more preferably in the range of 2,000 to 8,000.

The polyurethane resin may be obtained by subjecting a hydroxy group of Component A-a to a polyaddition reaction with an isocyanate group of the polyisocyanate compound (Component A-b). Preferred examples of Component A-b include a diisocyanate compound having two isocyanate groups. The diisocyanate compound is explained below.

The diisocyanate compound is preferably a compound represented by Formula (3) below.

OCN-L¹-NCO (3)

wherein in Formula (3), L1 represents a divalent aliphatic or aromatic hydrocarbon group which may be substituted. According to necessity, L1 may have another functional group which does not react with an isocyanate group, for example, an ester group, a urethane group, an amide group, or an ureido group.

Examples of the diisocyanate compound include an aliphatic diisocyanate compound, an alicyclic diisocyanate compound, an aromatic-aliphatic diisocyanate compound, and an aromatic diisocyanate compound.

Examples of the aliphatic diisocyanate compound include 1,3-trimethylene diisocyanate, 1,4-tetramethylene diisocyanate, 1,3-pentamethylene diisocyanate, 1,5-pentamethylene diisocyanate, 1,6-hexamethylene diisocyanate, 1,2-propylene diisocyanate, 1,2-butylene diisocyanate, 2,3-butylene diisocyanate, 1,3-butylene diisocyanate, 2-methyl-1,5-pentamethylene diisocyanate, 3-methyl-1,5-pentamethylene diisocyanate, 2,4,4-trimethyl-1,6-hexamethylene diisocyanate, 2,2,4-trimethyl-1,6-hexamethylene diisocyanate, 2,6-diisocyanate methyl caproate, and lysine diisocyanate.

Examples of the alicyclic diisocyanate compound include 1,3-cyclopentane diisocyanate, 1,4-cyclohexane diisocyanate, 1,3-cyclohexane diisocyanate, 3-isocyanatomethyl-3,5,5-trimethylcyclohexyl isocyanate, 4,4'-methylenebis(cyclohexyl isocyanate), methyl-2,4-cyclohexane diisocyanate, methyl-2,6-cyclohexane diisocyanate, 1,3-bis(isocyanatomethyl)cyclohexane, 1,4-bis(isocyanatomethyl)cyclohexane, isophorone diisocyaante, and norbornane diisocyanate.

Examples of the aromatic-aliphatic diisocyanate compound include 1,3-xylene diisocyanate, 1,4-xylene diisocyanate, ω,ω'-diisocyanato-1,4-diethylbenzene, 1,3-bis(1-isocyanato-1-m ethylethyl)benzene, 1,4-bis(1 - isocyanato-1-methylethyl)benzene, and 1,3-bis(α,α-dimethylisocyanatomethyl)benzene.

Examples of the aromatic diisocyanate compound include *m*-phenylene diisocyanate, *p*-phenylene diisocyanate, 2,4-tolylene diisocyanate, 2,6-tolylene diisocyanate, naphthylene-1,4-diisocyanate, 1,5-naphthalene diisocyanate, 4,4'-diphenyl diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2°-diphenylpropane-4,4'-diisocyanate, 3,3'-dimethyldiphenylmethane-4,4'-diisocyanate, 4,4'-diphenylpropane diisocyanate, and 3,3'-dimethoxydiphenyl-4,4'-diisocyanate.

Among them, 1,6-hexamethylene diisocyanate, isophorone diisocyaante, 4,4'-diphenylmethane diisocyanate, and 2,4-tolylene diisocyanate are particularly preferable.

In the synthetic reaction of a polyurethane resin by a polyaddition reaction between Component A-a and Component A-b above, by further adding (Component A-c) a diol compound having an ethylenically unsaturated group at a molecular terminal and (Component A-d) a diol compound having an ethylenically unsaturated group in the molecule and having a hydroxy group at both molecular termini, an ethylenically unsaturated group can be introduced at a side chain terminal and in the interior of a main chain of the polyurethane resin thus formed.

Component A-c and Component A-d are explained below.

Examples of the ethylenically unsaturated group include a group with an unsaturated carboxylic acid as a starting material, such as an acryloyl group, a methacryloyl group, an acrylamide group, a methacrylamide group, or a phthalimide group, and a radically polymerizable group such as a styryl group, a vinyl group, or an allyl group. Among them, an acryloyl group and a methacryloyl group are preferable.

Component A-c is a diol compound having an ethylenically unsaturated group at a molecular terminal, and is preferably a compound represented by Formula (a-c1) or Formula (a-c2).

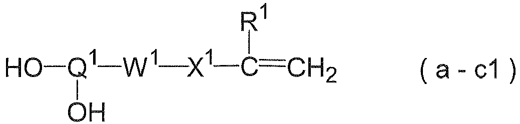

In Formula (a-c1), R¹ denotes a hydrogen atom or a methyl group, X¹ denotes a single bond, a carbonyl group, an ester bond (-OC(O)-*), or an amide bond (-NHC(O)-*), W¹ denotes a divalent linking group such as a single bond, an ether bond, an oxyalkylene group having 1 to 10 carbons, an alkylene group having 1 to 10 carbons, or an arylene group having 6 to 10 carbons, and Q¹ denotes a trivalent linking group that is an aliphatic hydrocarbon group having 3 to 10 carbons, may be straight-chain or branched, has one hydroxy group on at least two different carbon atoms, and has at least one single bond. '*' denotes a part bonding to the carbon atom of the ethylenically unsaturated group.

Component A-c is specifically a divalent alcohol compound having an ethylenically unsaturated group, and preferred examples of the ethylenically unsaturated group include groups that are cited as examples in the explanation of the ethylenically unsaturated group above.

With regard to the divalent alcohol compound having an ethylenically unsaturated group, a diol having an ethylenically unsaturated group that is used as a urethane starting material may be obtained by using as a starting material for example 2,2-dimethyl-1,3-dioxolane-4-methanol (Wako Pure Chemical Industries, Ltd.), whose ethylenically unsaturated group has been protected by an acetal group, and carrying out (meth)acryloylation, introduction of a styryl group, vinyl etherification, and then deacetalization using hydrogen chloride (methanol solution), etc., by reference to Tetrahedron Letters, 1985, 26, 3095, Angewandte Chemie, 2007, 119, 4229, and J. Am. Chem. Soc., 2002, 124, 1590.

As a specific example of the divalent alcohol compound having an ethylenically unsaturated group, Blemmer GLM manufactured by NOF Corporation may be obtained as a commercial product.

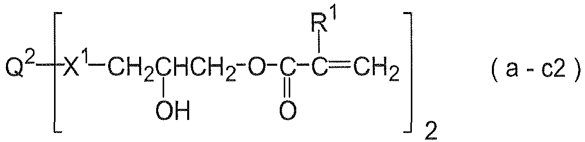

In Formula (a-c2), R¹ denotes a hydrogen atom or a methyl group, and X¹ denotes a single bond, a carbonyl group, an ester bond (-OC(O)-*), an ether bond (-O-), or an amide bond (-NHC(O)-*). In addition, * denotes a part bonding to Q². Q² denotes a divalent organic residue having 3 to 30 carbons, is preferably an alkylene group, an arylene group, a polyalkyleneoxy group, or a group formed by removing two hydrogen atoms from an aliphatic ring, and is more preferably a divalent group such as a hexamethylene group, a polypropyleneoxy group, a 1,2-phenylene group, a cyclohexan-1,2-yl group, or a group formed by removing two hydroxy groups from bisphenol A.

Specific examples of Formula (a-c2) include as commercial products DA-212, DA-250, DA-721, DA-722, DA-911M, DA-920, DA-931, DM-201, DM-811, DM-832, and DM-851 of the 'Denacol Acrylate (registered trademark)' series manufactured by Nagase ChemteX Corporation.

The diol compound having an ethylenically unsaturated group in the molecule and having a hydroxy group at both molecular termini (Component A-d) is a diol compound having a hydroxy group on carbon atoms at both termini and having an ethylenically unsaturated group in any position of the hydrocarbon bond chain between the above carbon atoms. The hydrocarbon bond part is preferably a straight chain. There may be one or more ethylenically unsaturated groups, but one is preferable. Component A-d is preferably an alkenylene-α,ω-diol.

Examples of Component A-d include 2-butone-1,4-diol, 3-methyl-2-2,5-diol, 3-hexene-2,6-diol, 3-hexene-1,6-diol, 2-heptene-1,5-diol, 2-heptene-1,6-diol, 3-heptene-1,7-diol, 4-octene-2,7-diol, 4-nonene-1,8-diol, 3-nonene-2,8-diol, a polyester diol formed from a diol and an ethylenically unsaturated group-containing carboxylic acid such as a polyester diol having as monomer units fumaric acid and diethylene glycol, polybutadienediol (Poly bd R-45HT, Poly bd R-15HT, Idemitsu Kosan Co., Ltd.), and polyisoprenediol (Poly ip, Idemitsu Kosan Co., Ltd.). Among them, 3-hexene-1,6-diol is particularly preferable.

Synthesis of Component A-1-1 may be carried out without particular restrictions by a known synthetic method for a polyurethane resin using Component A-a to Component A-d as staring materials. For example, it may be carried out by methods described in Examples 1 to 7 of JP-A-2011-136430.

The constitutional ratio (molar ratio) of Component A-a to Component A-d in Component A-1-1 is preferably Component A-a:Component A-b:Component A-c:Component A-d = 10-48 : 50 : 1-39 : 1-39.

One preferred example of Component A-1-1 is shown below as constituent unit structures. 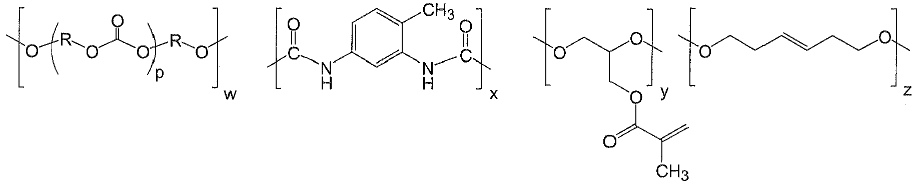 Wherein R denotes a hydrocarbon group having 3 to 50 carbons, p denotes an integer of 5 to 50, and w:x:y:z is the molar ratio and denotes 10-48 : 50 : 1-39 : 1-39.

Component A-1 preferably has an ethylenically unsaturated group at a side chain terminal and, in addition thereto, further has an ethylenically unsaturated group at a main chain terminal. Due to having an ethylenically unsaturated group at a side chain terminal and a main chain terminal, the printing durability of the flexographic printing plate for laser engraving of the present invention is further improved.

The polyurethane resin having an ethylenically unsaturated group at a side chain terminal and a main chain terminal (Component A-1-2) is explained below.

### (Component A-1-2) Polyurethane resin having ethylenically unsaturated group at side chain terminal and main chain terminal

The resin composition for laser engraving of the present invention preferably comprises the polyurethane resin having an ethylenically unsaturated group at a side chain terminal and a main chain terminal (Component A-1-2).

The ethylenically unsaturated group at a main chain terminal may be present at only one of the termini but is preferably present at both termini.

Component A-1-2 may be synthesized, in a polyaddition reaction employed in the above-mentioned synthesis of Component A-1, by leaving a hydroxy group or an isocyanate group at a main chain terminal of a polyurethane resin so obtained and reacting it with a compound having an ethylenically unsaturated group and a functional group that reacts with the hydroxy group or the isocyanate group. As compounds having such a functional group, a compound having an isocyanate group for the terminal hydroxy group and a compound having a hydroxy group for the terminal isocyanate group are preferable.

The polyurethane resin as the main chain part of Component A-1-2 may preferably be formed by a polyaddition reaction of at least one type of polyhydric alcohol compound (Component A-a), at least one type of polyisocyanate compound (Component A-b) and, furthermore, (Component A-c) a diol compound having an ethylenically unsaturated group at a molecular terminal. Subsequently, for example, by setting the total amount added of the alcohol compounds Component A-a and Component A-c so as to be in excess relative to the amount added of Component A-b, a hydroxy group is present at a main chain terminal of the polyurethane resin so obtained. By reacting the hydroxy group with (Component A-e) an isocyanate compound having an ethylenically unsaturated group, an ethylenically unsaturated group may be introduced at a main chain terminal of Component A-1-2.

Component A-a to Component A-c are as defined in the above-mentioned explanation.

Component A-e is explained below.

Preferred examples of the ethylenically unsaturated group of the isocyanate compound having an ethylenically unsaturated group (Component A-e) include groups cited as examples in the explanation of the ethylenically unsaturated group of Formula (a-c1). Furthermore, Component A-e is more preferably a compound represented by Formula (a-e).

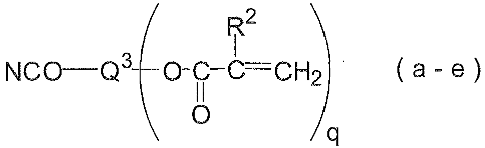

in Formula (a-e), R² denotes a hydrogen atom or a methyl group. Q³ denotes a divalent or trivalent organic residue and denotes a hydrocarbon group having 1 to 10 carbons, which may be straight-chain, branched, or alicyclic, or an aromatic group having 6 to 20 carbons, and q is 1 or 2. When q is 1, Q³ is preferably an alkylene group having 1 to 4 carbons and more preferably an ethylene group. When q is 2, Q³ is preferably a trivalent branched hydrocarbon group having 3 to 6 carbons, and more preferably a trivalent branched hydrocarbon group having 4 carbons.

Synthesis of Component A-1-2 may be carried out in accordance with the method used for synthesis of the polyurethane resin for Component A-1-1. As described above, in a reaction for the synthesis of a polyurethane resin, by setting the total amount added of the alcohol compounds Component A-a and Component A-c so as to be in excess relative to the amount added of the isocyanate compound Component A-b, a polyurethane resin having a hydroxy group at a main chain terminal is synthesized, and by further adding Component A-e, thus introducing an unsaturated group at a main chain terminal, Component A-1-2 may be obtained.

Examples of commercially available Components A-e include 2-methacryloyloxyethyl isocyanate (Karenz MOI (registered trademark)), 2-acryloyloxyethyl isocyanate (Karenz AOI (registered trademark)), and 1,1-(bisacryloyloxymethyl)ethyl isocyanate (Karenz BEI (registered trademark)) (all manufactured by Showa Denko K.K.).

The constitutional ratio (molar ratio) of Component A-a to Component A-c and Component A-e in Component A-1-2 is preferably Component A-a : Component A-b : Component A-c = 10-48 : 50 : 2-40. The constitutional ratio (molar ratio) of Component A-e is comparatively small relative to that of Component A-b because Component A-e is only bonded to a polyurethane polymer terminal.

One preferred example of Component A-1-2 is shown below as constituent unit structures.

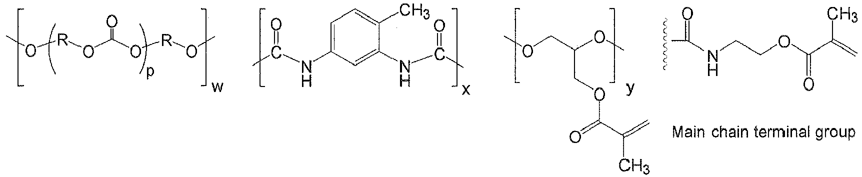

In the Formulae, R denotes a hydrocarbon group having 3 to 50 carbons, p denotes an integer of 5 to 50, the wavy line portion denotes a bonding part, and w:x:y denotes 10-48 : 50 : 2-40 as a molar ratio.

### (Component A-2) Polyurethane resin having ethylenically unsaturated group in interior of side chain and in main chain

In the present invention, Component A preferably comprises (Component A-2) a polyurethane resin having an ethylenically unsaturated group in the interior of a side chain and in a main chain.

Preferred examples of Component A-2 include (Component A-2-1) a polyurethane resin having an ethylenically unsaturated group in the interior of a side chain and in the interior of a main chain and (Component A-2-2) a polyurethane resin having an ethylenically unsaturated group in the interior of a side chain and at a main chain terminal.

Component A-2-1 and Component A-2-2 are explained in detail below.

### (Component A-2-1) Polyurethane resin having ethylenically unsaturated group in interior of side chain and in interior of main chain

The resin composition of the present invention may preferably comprise a polyurethane resin having an ethylenically unsaturated group in the interior of a side chain and in the interior of a main chain (Component A-2-1).

The polyurethane resin that is a main chain part of Component A-2 is preferably formed by a polyaddition reaction of at least one type of polyhydric alcohol compound (Component A-a) and at least one type of polyisocyanate compound (Component A-b). By further incorporating, as some of the reaction species of the polyaddition reaction, (Component A-f) a diol compound having an ethylenically unsaturated group in the molecule and having at least a hydroxy group on a carbon atom other than at the molecular terminal and (Component A-d) a diol compound having an ethylenically unsaturated group in the molecule and having a hydroxy group at both molecular termini, an ethylenically unsaturated group may be introduced in the interior of a side chain and in the interior of a main chain of a specific plastomer of Component A-2-1.

Component A-a, Component A-b, and Component A-d are as described above.

Component A-f is explained below.

The diol compound having an ethylenically unsaturated group in the molecule and having at least a hydroxy group on a carbon atom other than a molecular terminal (Component A-f) is preferably a compound represented by Formula (a-f).

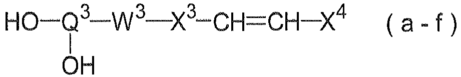

In Formula (a-f), W³ denotes a single bond, an ether bond, a carbonyl group, an ester bond (-OC(O)- or -C(O)O-), or an amide bond (-NHC(O)- or - C(O)NH-). X³ denotes an alkylene group having 1 to 12 carbons, may be straight chain or branched, and may have an inactive substituent. X⁴ denotes an alkyl group having 1 to 12 carbons, may be straight chain or branched, and may have an inactive substituent. Q³ denotes a trivalent linking group that is an aliphatic hydrocarbon group having 3 to 10 carbons, may be straight chain or branched, has one hydroxy group on at least two different carbon atoms, and has at least one single bond.

Specific examples of Component A-f include 2,3-dihydroxypropyl oleate, 2,3-dihydroxypropyl elaidiate, 2,3-dihydroxypropyl palmitoleate, 2,3-dihydroxypropyl myristoleate, and 2,3-dihydroxypropyl lauroleate. Among them, 2,3-dihydroxypropyl oleate is particularly preferable.

As a commercial product, 2,3-dihydroxypropyl oleate is available as NOFABLE GO-991 (NOF Corporation).

Synthesis of Component A-2-1 may be carried out by a known synthetic method for a polyurethane resin, without any particular restrictions, using Component A-a, Component A-b, Component A-d, and Component A-f as starting materials. For example, it may be carried out by methods described in Examples 1 to 7 of JP-A-2011-136430.

The constitutional ratio of Component A-a:Component A-b:Component A-d:Component A-f, which form Component A-2-1, is preferably 10-48 : 50 : 1-39 : 1-39 as a molar ratio.

One preferred example of Component A-2-1 is shown below as constituent unit structures.

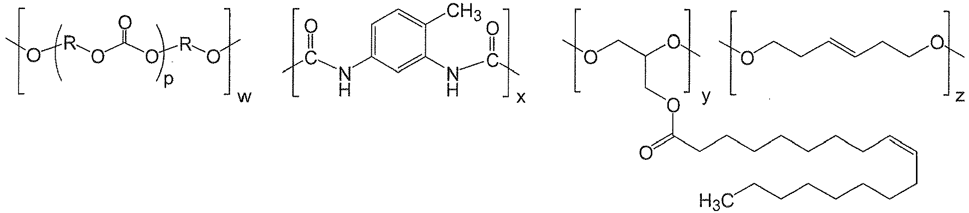

In the Formulae, R denotes a hydrocarbon having 3 to 50 carbons, p denotes an integer of 5 to 50, and w:x:y:z denotes 10-48 : 50 : 1-39 : 1-39 as a molar ratio.

Component A-2 preferably has an ethylenically unsaturated group at a main chain terminal in addition to an ethylenically unsaturated group in the interior of a side chain. Due to it having an ethylenically unsaturated group in the interior of a side chain and at a main chain terminal, the printing durability of the flexographic printing plate for laser engraving of the present invention is further improved.

The polyurethane resin having an ethylenically unsaturated group in the interior of a side chain and at a main chain terminal (Component A-2-2) is explained below.

### (Component A-2-2) Polyurethane resin having ethylenically unsaturated group in interior of side chain and at main chain terminal

The resin composition of the present invention preferably comprises as Component A (Component A-2-2) a polyurethane resin having an ethylenically unsaturated group in the interior of a side chain and at a main chain terminal.

The ethylenically unsaturated group at a main chain terminal may be present only at one terminal but is preferably present at both termini.

Component A-2-2 may be synthesized, in a polyaddition reaction employed in the above-mentioned synthesis of Component A-2, by leaving a hydroxy group or an isocyanate group at a main chain terminal of the polyurethane resin so obtained and incorporating as a reaction species a compound having an ethylenically unsaturated group and a functional group that reacts with the hydroxy group or the isocyanate group. As a compound having such a functional group, a compound having an isocyanate group for the terminal hydroxy group and a compound having a hydroxy group for the terminal isocyanate group are preferable.

The polyurethane resin as the main chain part of Component A-2-2 may preferably be formed by a polyaddition reaction of at least one type of polyhydric alcohol compound (Component A-a), at least one type of polyisocyanate compound (Component A-b) and, furthermore, (Component A-f) a diol compound having an ethylenically unsaturated group in the molecule and having a hydroxy group at least on a carbon atom other than a molecular terminal. Subsequently, for example, by setting the total amount added of the alcohol compounds Component A-a and Component A-f so as to be in excess relative to the amount added of Component A-b, a hydroxy group is present at a main chain terminal of the polyurethane resin so obtained. By reacting the hydroxy group with (Component A-e) an isocyanate compound having an ethylenically unsaturated group, an ethylenically unsaturated group may be introduced into a main chain terminal of Component A-2-2.

Component A-a, Component A-b, Component A-e, and Component A-f are as defined above.

The constitutional ratio (molar ratio) of Component A-a, Component A-b, Component A-e, and Component A-f in Component A-2-2 is preferably Component A-a : Component A-b : Component A-e = 10-48 : 50: 2-40. The constitutional ratio (molar ratio) of Component A-f is comparatively small relative to that of Component A-b because Component A-f is only bonded to a polyurethane polymer terminal.

One preferred example of Component A-2-2 is shown below as constituent unit structures.

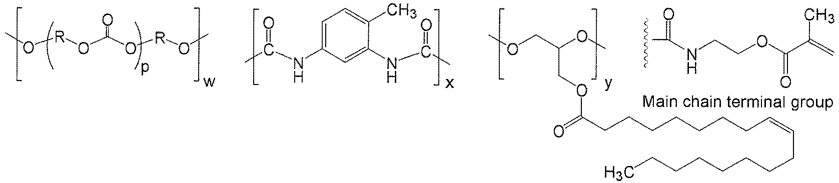

In the Formulae, R denotes a hydrocarbon group having 3 to 50 carbons, p denotes an integer of 5 to 50, the wavy line portion denotes a bonding part, and the w:x:y denotes 10-48 : 50 : 2-40 as a molar ratio.

Component A-1 and Component A-2 in the resin composition for laser engraving of the present invention are preferably resins having a number-average molecular weight of at least 1,000 but no greater than 50,000, more preferably at least 1,000 but no greater than 45,000, yet more preferably at least 1,000 but no greater than 40,000, and particularly preferably at least 2,000 but no greater than 40,000. Since there is a tendency for the printing durability strength of the flexographic printing plate of the present invention to improve and for it to be able to endure repeated use, the number-average molecular weight of Component A-1 and Component A-2 is preferably at least 1,000. On the other hand, since there is a tendency for a printing plate to be more easily produced due to the viscosity not increasing excessively when molding the resin composition for laser engraving of the present invention, the number-average molecular weight of Component A-1 and Component A-2 is preferably no greater than 50,000.

The number-average molecular weight of Component A may be determined by measurement by a GPC (gel permeation chromatograph) method using a standard polystyrene calibration curve.

The content of Component A in the resin composition for laser engraving of the present invention is preferably 5 to 90 wt% relative to the total solids content weight excluding volatile components (solvent), more preferably 15 to 85 wt%, and yet more preferably 30 to 80 wt%.

The resin composition for laser engraving of the present invention may comprise a binder polymer other than Component A.

The resin composition for laser engraving of the present invention preferably comprises Component A as a main component of the binder polymer (binding resin), and when another binder polymer is contained, the content of Component A relative to the entire binder polymer is preferably at least 60 wt%, more preferably at least 70 wt%, and yet more preferably at least 80 wt%. In addition, although the upper limit is not particularly limited, when another binder polymer is contained, it is preferably no greater than 99 wt%, more preferably no greater than 97 wt%, and yet more preferably no greater than 95 wt%.

### (Component B) Polymerization initiator

The resin composition for laser engraving of the present invention comprises (Component B) a polymerization initiator.

With regard to the polymerization initiator, those known to a person skilled in the art may be used without restrictions. A radical polymerization initiator, which is a preferred polymerization initiator, is explained in detail below, but the present invention is not limited by these descriptions.

Furthermore, the radical polymerization initiator may be a photo radical polymerization initiator or a thermal radical polymerization initiator, but is preferably a thermal radical polymerization initiator.

In the present invention, preferable radical polymerization initiators include (a) aromatic ketones, (b) onium salt compounds, (c) organic peroxides, (d) thio compounds, (e) hexaallylbiimidazole compounds, (f) ketoxime ester compounds, (g) borate compounds, (h) azinium compounds, (i) metallocene compounds, (j) active ester compounds, (k) compounds having a carbon halogen bond, and (I) azo compounds. Hereinafter, although specific examples of the (a) to (I) are cited, the present invention is not limited to these.

In the present invention, when applies to the relief-forming layer of the flexographic printing plate precursor, from the viewpoint of engraving sensitivity and making a favorable relief edge shape, (c) organic peroxides and (I) azo compounds are more preferable, and (c) organic peroxides are particularly preferable.

The (a) aromatic ketones, (b) onium salt compounds, (d) thio compounds, (e) hexaallylbiimidazole compounds, (f) ketoxime ester compounds, (g) borate compounds, (h) azinium compounds, (i) metallocene compounds, (j) active ester compounds, and (k) compounds having a carbon halogen bonding may preferably include compounds described in paragraphs 0074 to 0118 of JP-A-2008-63554.

Moreover, (c) organic peroxides and (I) azo compounds preferably include the following compounds.

### (c) Organic peroxides

Preferable (c) organic peroxides as a radical polymerization initiator that can be used in the present invention include preferably a peroxide ester such as 3,3',4,4'-tetra (*t*-butylperoxycarbonyl)benzophenone, 3,3',4,4'-tetra(*t-*amylperoxycarbonyl)benzophenone, 3,3',4,4'-tetra(*t-*hexylparoxycarbonyl)benzophenone, 3,3',4,4'-tetra(*t-*octylperoxycarbonyl)benzophenone, 3,3',4,4'-tetra(cumylperoxycarbonyl)benzophenone, 3,3',4,4'-tetra(*p-*isopropylcumylperoxycarbonyl)benzophenone and di-*t-*butyldiperoxyisophthalate, *t*-butylperoxybenzoate, *t*-butylperoxy-3-methylbenzoate, *t*-butylperoxylaurate, *t*-butylperoxypivalate, *t*-butylperoxy-3,5,5-trimethylhexanoate, *t*-butylperoxyneoheptanoate, *t*-butylperoxyneodecanoate, *t-*butylperoxyacetate, and preferably α,α'-di(*t*-butylperoxy)diisopropylbenzene, *t-*butylcumylperoxide, di-*t*-butylperoxide, *t*-butylperoxyisopropylmonocarbonate, *t*-butylperoxy-2-ethylhexylmonocarbonate, and from the view point of thermal degradability, *t*-butylperoxybenzoate is more prederable.

### (I) Azo compounds

Preferable (I) azo compounds as a radical polymerization initiator that can be used in the present invention include those such as 2,2'-azobisisobutyronitrile, 2,2'-azobispropionitrile, 1,1'-azobis(cyclohexane-1-carbonitrile), 2,2'-azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl 2,2'-azobis(isobutyrate), 2,2'-azobis(2-methylpropionamideoxime), 2,2'-azobis[2-(2-imidazolin-2-yl)propane], 2,2'-azobis{2-methyl-*N*-[1,1-bis(hydroxymethyl)-2-hydroxyethyl]propionamidel, 2,2'-azobis[2-methyl-*N*-(2-hydroxyethyl)propionamide], 2,2'-azobis(*N*-butyl-2-methylpropionamide), 2,2'-azobis(*N*-cyclohexyl-2-methylpropionamide), 2,2'-azobis[*N*-(2-propenyl)-2-methyl-propionamide], 2,2'-azobis(2,4,4-trimethylpentane).

In addition, in the present invention, from the viewpoint of improvement of crosslinkablility and engraving sensitivity of a film (relief-forming layer), the organic peroxide (c) is particularly preferable as a polymerization initiator in the present invention.

From the viewpoint of engraving sensitivity, an embodiment in which the organic peroxide (c) and Component A are combined is particularly preferable.

It is surmised that this is because, when a relief-forming layer is cured by thermal crosslinking using an organic peroxide, unreacted organic peroxide that has not been involved in the generation of radicals remains, the remaining organic peroxide functions as an self-reactive additive, and decomposes exothermically at the time of laser engraving and, as a result, the above generated heat is added to the laser energy that is applied, thereby increasing the engraving sensitivity.

In addition, although it is described in detail when explaining a photothermal conversion agent, this effect is prominent when carbon black is used as a photothermal conversion agent. It is surmised that this is because, as a result of the heat generated from carbon black being transmitted to the organic peroxide (c), heat is generated not only from carbon black but also from the organic peroxide, and generation of thermal energy that is to be used for decomposition of Component A, etc. is synergistically carried out.

With regard to Component B in the present invention, one type may be used on its own or two or more types may be used in combination.

The content of Component B in the resin composition for laser engraving is preferably 0.05 to 10 wt%, and more preferably 0.05 to 5 wt%, and particularly preferably 0.1 to 3 wt%. relative to the total solids content. (Component C) (Meth)acrylate compound

In the present invention, a (meth)acrylate compound may be used as Component C. The (meth)acrylate compound means an acrylate compound and/or a methacrylate compound.

Component C is an organic compound having at least one (meth)acryloyl group per molecule and preferably having a number-average molecular weight of less than 1,000. From the viewpoint of ease of mixing of Component C and Component A, the number-average molecular weight of Component C is preferably less than 1,000.

Component C is not particularly limited as long as it is a compound having at least one (meth)acryloyl group per molecule, but from the viewpoint of reaction rate and uniformity of curing, the number thereof is preferably no greater than 10. The number of (meth)acryloyl groups per molecule is preferably 1 to 8, more preferably 1 to 6, yet more preferably 2 to 4, and particularly preferably 2.

Specific examples of Component C include (meth)acrylic acid and a derivative thereof.

Examples of the derivative of the above compound include a (meth)acrylate compound having an alicyclic skeleton such as a cycloalkane(meth)acrylate, a bicycloalkane(meth)acrylate, a cycloalkene(meth)acrylate, and a bicycloalkene(meth)acrylate; a (meth)acrylate compound having an aromatic skeleton such as benzyl(meth)acrylate, phenyl(meth)acrylate, phenoxy(meth)acrylate, or fluorene(meth)acrylate; a (meth)acrylate compound having an aliphatic skeleton such as an alkyl(meth)acrylate, a haloalkyl(meth)acrylate, an alkoxyalkyl(meth)acrylate, a hydroxyalkyl(meth)acrylate, or an aminoalkyl(meth)acrylate; a (meth)acrylate compound having a functional group or a heterocyclic group such as tetrahydrofurfuryl(meth)acrylate, allyl(meth)acrylate, glycidyl(meth)acrylate, or an alkylene glycol (meth)acrylate; a polyoxyalkylene glycol (meth)acrylate, a polyoxyalkylene glycol di(meth)acrylate, a polyalkylene glycol monoalkyl (or allyl) ether (meth)acrylate, and a (meth)acrylate ester of a polyhydric alcohol such as trimethylolpropane, pentaerythritol, or glycerol. Furthermore, it may be a heteroaromatic compound containing a heteroatom such as nitrogen or sulfur. Among them, a di(meth)acrylate compound of a polyhydric alcohol having a polyoxyalkylene chain is preferable.

Specific examples of Component C include a di(meth)acrylate compound such as ethylene glycol di(meth)acrylate, diethylene glycol di(meth)acrylate, triethylene glycol di(meth)acrylate, polyethylene glycol di(meth)acrylate, tripropylene glycol di(meth)acrylate, bisphenol A di(meth)acrylate, or bisphenol A bis((meth)acryloyloxyethoxyethoxyethyl ether); a tri(meth)acrylate compound such as trimethylolpropane tri(meth)acrylate, trimethylolethane tri(meth)acrylate, or pentaerythritol tri(meth)acrylate; a tetra(meth)acrylate such as pentaerythritol tetra(meth)acrylate or dipentaerythritol tetra(meth)acrylate; and dipentaerythritol hexa(meth)acrylate. Among them, polyethylene glycol di(meth)acrylate is more preferable, and polyethylene glycol dimethacrylate is particularly preferable.

In order to further enhance the rebound resilience of a printing plate, Component C may be appropriately selected by utilizing known technical knowledge related to photosensitive resins for printing plates (e.g. a methacrylic monomer described in JP-A-7-239548, etc.).

With regard to Component C in the resin composition of the present invention, one type may be used on its own or two or more types may be used in combination.

The ratio of the amounts of Component A and Component C added in the resin composition of the present invention is preferably Component A:Component C (ratio by weight) = 95: 5-20 : 80, more preferably 90 : 10-30 : 70, and yet more preferably 80 : 20-40 : 60.

The content of Component C in the resin composition of the present invention is preferably 2 to 80 wt% relative to the total solids content weight, more preferably 5 to 70 wt%, and particularly preferably 10 to 60 wt%.

### <(Component D) Photothermal conversion agent>

The resin composition for laser engraving of the present invention preferably comprises a photothermal conversion agent. It is surmised that the photothermal conversion agent absorbs laser light and generates heat thus promoting thermal decomposition of a cured material of the resin composition for laser engraving of the present invention. Because of this, it is preferable to select a photothermal conversion agent that absorbs light having the wavelength of the laser that is used for engraving.

When a laser (a YAG laser, a semiconductor laser, a fiber laser, a surface emitting laser, etc.) emitting infrared at a wavelength of 700 to 1,300 nm is used as a light source for laser engraving, it is preferable for the relief-forming layer in the present invention to comprise a photothermal conversion agent that has an absorption at wavelength 700 to 1,300 nm.

As the photothermal conversion agent in the present invention, various types of dye or pigment are used.

With regard to the photothermal conversion agent, examples of dyes that can be used include commercial dyes and known dyes described in publications such as 'Senryo Binran' (Dye Handbook) (Ed. by The Society of Synthetic Organic Chemistry, Japan, 1970). Specific examples include dyes having a maximum absorption wavelength at 700 nm to 1,300 nm, such as azo dyes, metal complex salt azo dyes, pyrazolone azo dyes, naphthoquinone dyes, anthraquinone dyes, phthalocyanine dyes, carbonium dyes, diimmonium compounds, quinone imine dyes, methine dyes, cyanine dyes, squarylium colorants, pyrylium salts, and metal thiolate complexes. In particular, cyanine-based colorants such as heptamethine cyanine colorants, oxonol-based colorants such as pentamethine oxonol colorants, phthalocyanine-based colorants, and dyes described in paragraphs 0124 to 0137 of JP-A-2008-63554 are preferably used.

With regard to the photothermal conversion agent used in the present invention, examples of pigments include commercial pigments and pigments described in the Color Index (C.I.) Handbook, 'Saishin Ganryo Binran' (Latest Pigments Handbook) (Ed. by Nippon Ganryo Gijutsu Kyokai, 1977), 'Saisin Ganryo Ouyogijutsu' (Latest Applications of Pigment Technology) (CMC Publishing, 1986), 'Insatsu Inki Gijutsu' (Printing Ink Technology) (CMC Publishing, 1984) Examples include pigments described in paragraphs 0122 to 0125 of JP-A-2009-178869. Among these pigments, carbon black is preferable.

Any carbon black, regardless of classification by ASTM and application (e.g. for coloring, for rubber, for dry cell, etc.), may be used as long as dispersibility, etc. in the composition is stable. Carbon black includes for example furnace black, thermal black, channel black, lamp black, and acetylene black. In order to make dispersion easy, a black colorant such as carbon black may be used as color chips or a color paste by dispersing it in nitrocellulose or a binder in advance using, as necessary, a dispersant, and such chips and paste are readily available as commercial products. Examples include of carbon black described in paragraphs 0130 to 0134 of JP-A-2009-178869.

With regards to photothermal conversion agent in the resin composition of the present invention only one kind may be used, or two or more kinds may be used in combination.

The content of the photothermal conversion agent in the resin composition for laser engraving of the present invention largely depends on the size of the molecular extinction coefficient characteristic to the molecule, and is preferably 0.01 to 30 wt % relative to the total weight of the solids content of the resin composition, more preferably 0.05 to 20 wt %, and yet more preferably 0.1 to 10 wt %.

Various components other than Components A to D may be comprised in the resin composition of the present invention and are explained below.

### <Plasticizer>

The resin composition for laser engraving of the present invention may comprise a plasticizer. Meanwhile, in the present invention, since the resin composition compsises Component A and thus a relief layer obtained has excellent flexibility, a plasticizer may not be added.

Since the plasticizer in the present invention is a compound having an action of softening a film formed by the resin composition for laser engraving, it is necessary that the plasticizer have good compatibility with the binder polymer.

Examples of the plasticizer preferably used include dioctyl phthalate, didodecyl phthalate, bisbutoxyethyl adipate, polyethylene glycols, polypropylene glycol (monool type or diol type), and polypropylene glycol (monool type or diol type).

Among these, bisbutoxyethyl adipate is particularly preferable.

Regarding the plasticizer in the resin composition of the present invention, only one kind may be used, or two or more kinds may be used in combination.

### <Solvent>

The resin composition for lazer engraving of the present invention preferably comprise a solvent.

As a solvent, an organic solvent is preferably used.

Specific preferred examples of the aprotic organic solvent include acetonitrile, tetrahydrofuran, dioxane, toluene, propylene glycol monomethyl ether acetate, methyl ethyl ketone, acetone, methyl isobutyl ketone, ethyl acetate, butyl acetate, ethyl lactate, N,N-dimethylacetamide, N-methylpyrrolidone, and dimethyl sulfoxide.

Specific preferred examples of the protic organic solvent include methanol, ethanol, 1-propanol, 2-propanol, 1-butanol, 1-methoxy-2-propanol, ethylene glycol, diethylene glycol, and 1,3-propanediol.

### <Other additives>

The resin composition for laser engraving of the present invention may comprise as appropriate various types of known additives as long as the effects of the present invention are not inhibited. Examples include a wax, a process oil, a metal oxide, an antiozonant, an anti-deterioration agent, a thermopolymerization inhibitor, and a colorant, and one type thereof may be used on its own or two more types may be used in combination.

### (Flexographic printing plate precursor for laser engraving)

A first embodiment of the flexographic printing plate precursor for laser engraving of the present invention comprises a relief-forming layer formed from the resin composition for laser engraving of the present invention.

A second embodiment of the flexographic printing plate precursor for laser engraving of the present invention comprises a crosslinked relief-forming layer formed by crosslinking a relief-forming layer formed from the resin composition for laser engraving of the present invention.

Flexographic printing plate precursor for laser engraving of the present invention preferably comprises closslinked relief-forming layer closslinked by heat.

In the present invention, the 'flexographic printing plate precursor for laser engraving' means both or one of a plate having a crosslinkable relief-forming layer formed from the resin composition for laser engraving in a state before being crosslinked and a plate in a state in which it is cured by light and/or heat.

In the present invention, the 'relief-forming layer' means a layer in a state before being crosslinked, that is, a layer formed from the resin composition for laser engraving of the present invention, which may be dried as necessary.

In the present invention, the 'crosslinked relief-forming layer' means a layer formed by crosslinking the relief-forming layer. The crosslinking is preferably carried out by means of light and/or heat. Furthermore, the crosslinking is not particularly limited as long as it is a reaction by which the resin composition is cured, and it is a concept that includes a structure crosslinked due to reactions between Component A's, but Component A may react with another component such as Component C to thus form the cossllinking.

The 'flexographic printing plate' is prepared by laser engraving a printing plate precursor having a crosslinked relief-forming layer.

Moreover, in the present invention, the 'relief layer' means a layer of the relief printing plate formed by engraving using a laser, that is, the crosslinked relief-forming layer after laser engraving.

A flexographic printing plate precursor for laser engraving of the present invention comprises a relief-forming layer formed from the resin composition for laser engraving of the present invention, which has the above-mentioned components. The relief-forming layer is preferably provided above a support.

The flexographic printing plate precursor for laser engraving may further comprise, as necessary, an adhesive layer between the support and the relief-forming layer and, above the relief-forming layer, a slip coat layer and a protection film.

### <Relief-forming layer>

The relief-forming layer is a layer formed from the resin composition for laser engraving of the present invention and is preferably a heat-crosslinkable layer.

As a mode in which a flexographic printing plate is prepared using the flexographic printing plate precursor for laser engraving, a mode in which a flexographic printing plate is prepared by crosslinking a relief-forming layer to thus form a flexographic printing plate precursor having a crosslinked relief-forming layer, and the crosslinked relief-forming layer (hard relief-forming layer) is then laser-engraved to thus form a relief layer is preferable. By crosslinking the relief-forming layer, it is possible to prevent abrasion of the relief layer during printing, and it is possible to obtain a flexographic printing plate having a relief layer with a sharp shape after laser engraving.

The relief-forming layer may be formed by molding the resin composition for laser engraving that has the above-mentioned components for a relief-forming layer into a sheet shape or a sleeve shape. The relief-forming layer is usually provided above a support, which is described later, but it may be formed directly on the surface of a member such as a cylinder of equipment for plate making or printing or may be placed and immobilized thereon, and a support is not always required.

A case in which the relief-forming layer is mainly formed in a sheet shape is explained as an example below.

### <Support>

A material used for the support of the relief printing plate precursor for laser engraving is not particularly limited, but one having high dimensional stability is preferably used, and examples thereof include metals such as steel, stainless steel, or aluminum, plastic resins such as a polyester (e.g. PET (polyethylene terephthalate), PBT (polybutylene terephthalate), or PAN (polyacrylonitrile)) or polyvinyl chloride, synthetic rubbers such as styrenebutadiene rubber, and glass fiber-reinforced plastic resins (epoxy resin, phenolic resin, etc.). As the support, a PET film or a steel substrate is preferably used. The configuration of the support depends on whether the relief-forming layer is in a sheet shape or a sleeve shape.

### <Adhesive layer>

An adhesive layer may be provided between the relief-forming layer and the support for the purpose of strengthening the adhesion between the two layers. Examples of materials (adhesives) that can be used in the adhesive layer include those described in 'Handbook of Adhesives', Second Edition, Ed by I. Skeist, (1977).

### <Protection film, slip coat layer>

For the purpose of preventing scratches or dents in the relief-forming layer surface or the crosslinked relief-forming layer surface, a protection film may be provided on the relief-forming layer surface or the crosslinked relief-forming layer surface. The thickness of the protection film is preferably 25 to 500 µm, and more preferably 50 to 200 µm. The protection film may employ, for example, a polyester-based film such as PET or a polyolefin-based film such as PE (polyethylene) or PP (polypropylene). The surface of the film may be made matte. The protection film is preferably peelable.

When the protection film is not peelable or conversely has poor adhesion to the relief-forming layer, a slip coat layer may be provided between the two layers. The material used in the slip coat layer preferably employs as a main component a resin that is soluble or dispersible in water and has little tackiness, such as polyvinyl alcohol, polyvinyl acetate, partially saponified polyvinyl alcohol, a hydroxyalkylcellulose, an alkylcellulose, or a polyamide resin.

### (Process for producing flexographic printing plate precursor for laser engraving)

Formation of a relief-forming layer in the flexographic printing plate precursor for laser engraving is not particularly limited, and examples thereof include a method in which a solution of the resin composition for laser engraving is prepared, solvent is removed as necessary from this resin composition for laser engraving, and it is melt-extruded onto a support. Alternatively, a method may be employed in which the resin composition for laser engraving is cast onto a support, and this is dried in an oven to thus remove solvent from the resin composition.

Among them, the process for producing a flexographic printing plate precursor for laser engraving of the present invention is preferably a production process comprising a layer formation step of forming a relief-forming layer from the resin composition for laser engraving of the present invention and a crosslinking step of crosslinking the relief-forming layer by means of light and/or heat to thus obtain a flexographic printing plate precursor having a crosslinked relief-forming layer, and more preferably a production process comprising a layer formation step of forming a relief-forming layer from the resin composition for laser engraving of the present invention and a crosslinking step of crosslinking the relief-forming layer by means of heat to thus obtain a flexographic printing plate precursor having a crosslinked relief-forming layer.

Subsequently, as necessary, a protection film may be laminated on the relief-forming layer. Laminating may be carried out by compression-bonding the protection film and the relief-forming layer by means of heated calendar rollers, etc. or putting a protection film into intimate contact with a relief-forming layer whose surface is impregnated with a small amount of solvent.

When a protection film is used, a method in which a relief-forming layer is first layered on a protection film and a support is then laminated may be employed.

When an adhesive layer is provided, it may be dealt with by use of a support coated with an adhesive layer. When a slip coat layer is provided, it may be dealt with by use of a protection film coated with a slip coat layer.

### <Layer formation step>

The process for making the relief printing plate precursor for laser engraving of the present invention preferably comprises a layer formation step of forming a relief-forming layer from the resin composition for laser engraving of the present invention.

Preferred examples of a method for forming a relief-forming layer include a method in which the resin composition for laser engraving of the present invention is prepared, solvent is removed as necessary from this resin composition for laser engraving, and it is then melt-extruded onto a support and a method in which the resin composition for laser engraving of the present invention is prepared, the resin composition for laser engraving of the present invention is cast onto a support, and this is dried in an oven to thus remove the solvent.

The resin composition for laser engraving may be produced by, for example, dissolving Components A to D, and an optional components in an appropriate solvent.

The thickness of the relief-forming layer in the flexographic printing plate precursor for laser engraving before and after crosslinking is preferably at least 0.05 mm but no greater than 10 mm, more preferably at least 0.05 mm but no greater than 7 mm, and yet more preferably at least 0.05 mm but no greater than 3 mm.

### <Crosslinking step>

The process for producing a flexographic printing plate precursor for laser engraving of the present invention is preferably a production process comprising a crosslinking step of crosslinking the relief-forming layer by means of light and/or heat to thus obtain a flexographic printing plate precursor having a crosslinked relief-forming layer.

When the relief-forming layer comprises a photopolymerization initiator, the relief-forming layer may be crosslinked by irradiating the relief-forming layer with actinic radiation that triggers the photopolymerization initiator.

It is preferable to apply light to the entire surface of the relief-forming layer. Examples of the light (also called 'actinic radiation') include visible light, UV light, and an electron beam, but UV light is most preferably used. When the side where there is a substrate, such as a relief-forming layer support, for fixing the relief-forming layer, is defined as the reverse face, only the front face need be irradiated with light, but when the support is a transparent film through which actinic radiation passes, it is preferable to further irradiate the reverse face with light as well. When a protection film is present, irradiation from the front face may be carried out with the protection film as it is or after peeling off the protection film. Since there is a possibility of polymerization being inhibited in the presence of oxygen, irradiation with actinic radiation may be carried out after superimposing a polyvinyl chloride sheet on the relief-forming layer and evacuating.

When the relief-forming layer comprises a thermopolymerization initiator (it being possible for the above-mentioned photopolymerization initiator to function also as a thermopolymerization initiator), the relief-forming layer may be crosslinked by heating the flexographic printing plate precursor for laser engraving (step of crosslinking by means of heat). As heating means, there can be cited a method in which a printing plate precursor is heated in a hot air oven or a far-infrared oven for a predetermined period of time and a method in which it is put into contact with a heated roller for a predetermined period of time.

As a method for crosslinking the relief-forming layer, from the viewpoint of the relief-forming layer being uniformly curable (crosslinkable) from the surface into the interior, crosslinking by heat is preferable.

Due to the relief-forming layer being crosslinked, firstly, a relief formed after laser engraving becomes sharp and, secondly, tackiness of engraving residue formed when laser engraving is suppressed. If an uncrosslinked relief-forming layer is laser-engraved, residual heat transmitted to an area around a laser-irradiated part easily causes melting or deformation of a part that is not targeted, and a sharp relief layer cannot be obtained in some cases. Furthermore, in terms of the general properties of a material, the lower the molecular weight, the more easily it becomes a liquid rather than a solid, that is, there is a tendency for tackiness to be stronger. Engraving residue formed when engraving a relief-forming layer tends to have higher tackiness the more that low-molecular-weight materials are used. Since a polymerizable compound, which is a low-molecular-weight material, becomes a polymer by crosslinking, the tackiness of the engraving residue formed tends to decrease.

When the crosslinking step is a step of carrying out crosslinking by light, although equipment for applying actinic radiation is relatively expensive, since a printing plate precursor does not reach a high temperature, there are hardly any restrictions on starting materials for the printing plate precursor.

When the crosslinking step is a step of carrying out crosslinking by heat, although there is the advantage that particularly expensive equipment is not needed, since a printing plate precursor reaches a high temperature, it is necessary to carefully select the starting materials used while taking into consideration the possibility that a thermoplastic polymer, which becomes soft at high temperature, will deform during heating, etc.

During thermal crosslinking, it is preferable to add a thermopolymerization initiator. As the thermopolymerization initiator, a commercial thermopolymerization initiator for free radical polymerization may be used. Examples of such a thermopolymerization initiator include an appropriate peroxide, hydroperoxide, and azo group-containing compound. A representative vulcanizing agent may also be used for crosslinking. Thermal crosslinking may also be carried out by adding a heat-curable resin such as for example an epoxy resin as a crosslinking component to a layer.

### (Flexographic printing plate and process for making same)

The process for making a flexographic printing plate of the present invention preferably comprises an engraving step of laser engraving a flexographic printing plate precursor comprising a crosslinked relief-forming layer formed by crosslinking by means of light and/or heat a relief-forming layer comprising the resin composition for laser engraving of the present invention, and more preferably comprises an engraving step of laser engraving a flexographic printing plate precursor comprising a crosslinked relief-forming layer formed by crosslinking by means of heat a relief-forming layer comprising the resin composition for laser engraving of the present invention.

The flexographic printing plate of the present invention is a flexographic printing plate having a relief layer obtained by crosslinking and laser-engraving a layer formed from the resin composition for laser engraving of the present invention, and is preferably a flexographic printing plate made by the process for producing a flexographic printing plate of the present invention.

The flexographic printing plate of the present invention may suitably employ an aqueous ink when printing.

The layer formation step and the crosslinking step in the process for making a flexographic printing plate of the present invention mean the same as the layer formation step and the crosslinking step in the above-mentioned process for producing a flexographic printing plate precursor for laser engraving, and preferred ranges are also the same.

### <Engraving step>

The process for making a flexographic printing plate of the present invention preferably comprises an engraving step of laser-engraving the relief printing starting plate having a crosslinked relief-forming layer.

The engraving step is a step of laser-engraving a crosslinked relief-forming layer that has been crosslinked in the crosslinking step to thus form a relief layer. Specifically, it is preferable to engrave a crosslinked relief-forming layer that has been crosslinked by irradiation with laser light according to a desired image, thus forming a relief layer. Furthermore, a step in which a crosslinked relief-forming layer is subjected to scanning irradiation by controlling a laser head using a computer in accordance with digital data of a desired image can preferably be cited.

This engraving step preferably employs an infrared laser. When irradiated with an infrared laser, molecules in the crosslinked relief-forming layer undergo molecular vibration, thus generating heat. When a high power laser such as a carbon dioxide laser or a YAG laser is used as the infrared laser, a large quantity of heat is generated in the laser-irradiated area, and molecules in the crosslinked relief-forming layer undergo molecular scission or ionization, thus being selectively removed, that is, engraved. The advantage of laser engraving is that, since the depth of engraving can be set freely, it is possible to control the structure three-dimensionally. For example, for an area where fine halftone dots are printed, carrying out engraving shallowly or with a shoulder prevents the relief from collapsing due to printing pressure, and for a groove area where a fine outline character is printed, carrying out engraving deeply makes it difficult for ink the groove to be blocked with ink, thus enabling breakup of an outline character to be suppressed.

In particular, when engraving is carried out using an infrared laser that corresponds to the absorption wavelength of the photothermal conversion agent, it becomes possible to selectively remove the crosslinked relief-forming layer at higher sensitivity, thus giving a relief layer having a sharp image.

As the infrared laser used in the engraving step, from the viewpoint of productivity, cost, etc., a carbon dioxide laser (a CO2 laser) or a semiconductor laser is preferable. In particular, a fiber-coupled semiconductor infrared laser (FC-LD) is preferably used. In general, compared with a CO2 laser, a semiconductor laser has higher efficiency laser oscillation, is less expensive, and can be made smaller. Furthermore, it is easy to form an array due to the small size. Moreover, the shape of the beam can be controlled by treatment of the fiber.

With regard to the semiconductor laser, one having a wavelength of 700 to 1,300 nm is preferable, one having a wavelength of 800 to 1,200 nm is more preferable, one having a wavelength of 860 to 1,200 nm is futher preferable, and one having a wavelength of 900 to 1,100 nm is particularly preferable.

Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2nd Edition' The Laser Society of Japan, and 'Applied Laser Technology' The Institute of Electronics and Communication Engineers, etc.

Moreover, as plate making equipment comprising a fiber-coupled semiconductor laser that can be used suitably in the process for making a relief printing plate employing the relief printing starting plate of the present invention, those described in detail in JP-A-2009-172658 and JP-A-2009-214334 can be cited.

The process for making a flexographic printing plate of the present invention may as necessary further comprise, subsequent to the engraving step, a rinsing step, a drying step, and/or a post-crosslinking step, which are shown below.

Rinsing step: a step of rinsing the engraved surface by rinsing the engraved relief layer surface with water or a liquid containing water as a main component.

Drying step: a step of drying the engraved relief layer.

Post-crosslinking step: a step of further crosslinking the relief layer by applying energy to the engraved relief layer.

After the above-mentioned step, since engraving residue is attached to the engraved surface, a rinsing step of washing off engraving residue by rinsing the engraved surface with water or a liquid containing water as a main component may be added. Examples of rinsing means include a method in which washing is carried out with tap water, a method in which high pressure water is spray-jetted, and a method in which the engraved surface is brushed in the presence of mainly water using a batch or conveyor brush type washout machine known as a photosensitive resin relief printing starting plate, and when slime due to engraving residue cannot be eliminated, a rinsing liquid to which a soap or a surfactant is added may be used.

When the rinsing step of rinsing the engraved surface is carried out, it is preferable to add a drying step of drying an engraved relief-forming layer so as to evaporate rinsing liquid.

Furthermore, as necessary, a post-crosslinking step for further crosslinking the relief-forming layer may be added. By carrying out a post-crosslinking step, which is an additional crosslinking step, it is possible to further strengthen the relief formed by engraving.

The pH of the rinsing liquid that can be used in the present invention is preferably at least 9, more preferably at least 10, and yet more preferably at least 11. The pH of the rinsing liquid is preferably no greater than 14, more preferably no greater than 13.5, yet more preferably no greater than 13.2. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may contain as a solvent other than water a water-miscible solvent such as an alcohol, acetone, or tetrahydrofuran.

The rinsing liquid preferably comprises a surfactant.

From the viewpoint of removability of engraving residue and little influence on a flexographic printing plate, preferred examples of the surfactant that can be used in the present invention include betaine compounds (amphoteric surfactants) such as a carboxybetaine compound, a sulfobetaine compound, a phosphobetaine compound, an amine oxide compound, and a phosphine oxide compound.

Furthermore, examples of the surfactant also include known anionic surfactants, cationic surfactants, amphoteric surfactants, and nonionic surfactants. Moreover, a fluorine-based or silicone-based nonionic surfactant may also be used in the same manner.

With regard to the surfactant, one type may be used on its own or two or more types may be used in combination.

It is not necessary to particularly limit the amount of surfactant used, but it is preferably 0.01 to 20 weight % relative to the total weight of the rinsing liquid, and more preferably 0.05 to 10 weight %.

The flexographic printing plate of the present invention having a relief layer on the surface of any substrate such as a surpport etc. may be produced as described above.

From the viewpoint of satisfying suitability for various aspects of printing, such as abrasion resistance and ink transfer properties, the thickness of the relief layer of the relief printing plate is preferably at least 0.05 mm but no greater than 10 mm, more preferably at least 0.05 mm but no greater than 7 mm, and yet more preferably at least 0.05 mm but no greater than 3 mm.

Furthermore, the Shore A hardness of the relief layer of the flexographic printing plate is preferably at least 50° but no greater than 90°. When the Shore A hardness of the relief layer is at least 50°, even if fine halftone dots formed by engraving receive a strong printing pressure from a letterpress printer, they do not collapse and close up, and normal printing can be carried out. Furthermore, when the Shore A hardness of the relief layer is no greater than 90°, even for flexographic printing with kiss touch printing pressure it is possible to prevent patchy printing in a solid printed part.

The Shore A hardness in the present specification is a value measured by a durometer (a spring type rubber hardness meter) that presses an indenter (called a pressing needle or indenter) into the surface of a measurement target so as to deform it, measures the amount of deformation (indentation depth), and converts it into a numerical value.

The flexographic printing plate of the present invention is particularly suitable for printing by a flexographic printer using an aqueous ink, but printing is also possible when it is carried out by a relief printer using any of aqueous, oil-based, and UV inks, and printing is also possible when it is carried out by a flexographic printer using a UV ink. The relief printing plate of the present invention has excellent rinsing properties, there is no engraving residue, since a relief layer obtained has excellent elasticity aqueous ink transfer properties and printing durability are excellent, and printing can be carried out for a long period of time without plastic deformation of the relief layer or degradation of printing durability.

In accordance with the present invention, there can be provided a resin composition for laser engraving that has high laser engraving sensitivity and can give a flexographic printing plate having excellent printing durability, a flexographic printing plate precursor and a process for producing same employing the resin composition for laser engraving, and a process for making a flexographic printing plate employing the flexographic printing plate precursor and a flexographic printing plate obtained thereby.

### EXAMPLES

The present invention is explained more specifically by reference to the Examples and Comparative Examples below. However, the present invention is not limited by these Examples. 'Parts' in the description below means 'parts by weight' and '%' means 'wt%' unless otherwise specified.

The number-average molecular weight (Mn) of a polymer in the Examples denotes a value measured by a GPC method unless otherwise specified.

Synthesis of specific plastomers (AP-1) to (AP-4) used in the present invention is explained below.

### <Synthesis of specific plastomer (AP-1)>

A separable flask equipped with a thermometer, a stirrer, and a reflux condenser was charged with 59.76 parts of the polycarbonate diol 'PCDL (registered trademark) L4672' (Asahi Kasei: number-average molecular weight 1,990, OH value 56.4), 10.69 parts of NOFABLE GO-991 (NOF Corporation), 3.48 parts of 3-hexene-1,6-diol (Tokyo Chemical Industry Co., Ltd.), and 17.42 parts of Coronate T80 (Nippon Polyurethane Industry Co., Ltd.), and a reaction was carried out while heating at 80°C for about 3 hours, thus giving polyurethane AP-1.

The number-average molecular weight of the polymer thus obtained was 10,000. Furthermore, the ethylenically unsaturated group density was 0.66 mmol/g.

Moreover, the polymer thus obtained was a syrup at 20°C and deformed when an external force was applied, but did not return to the original shape even when the external force was removed.

### <Synthesis of specific plastomer (AP-2)>

Polyurethane AP-2 was obtained by the same method as for AP-1 except that the NOFABLE GO-991 was changed to 4.81 parts of Blemmer GLM (NOF Corporation).

The number-average molecular weight of the polymer thus obtained was 10,000. Furthermore, the ethylenically unsaturated group density was 0.70 mmol/g.

Moreover, the polymer thus obtained was a syrup at 20°C and deformed when an external force was applied, but did not return to the original shape even when the external force was removed.

### <Synthesis of specific plastomer (AP-3)>

A separable flask equipped with a thermometer, a stirrer, and a reflux condenser was charged with 59.76 parts of the polycarbonate diol 'PCDL (registered trademark) L4672' (Asahi Kasei: number-average molecular weight 1,990, OH value 56.4), 21.39 parts of NOFABLE GO-991 (NOF Corporation), and 17.42 parts of Coronate T80 (Nippon Polyurethane Industry Co., Ltd.), and a reaction was carried out while heating at 80°C for about 3 hours. Subsequently, 1.98 parts of 2-methacryloyloxyethyl isocyanate ('MOI', Showa Denko K.K.) was added, and a reaction was further carried out for about 3 hours, thus giving polyurethane AP-3.

The number-average molecular weight of the polymer thus obtained was 10,000. Furthermore, the ethylenically unsaturated group density was 0.73 mmol/g.

Moreover, the polymer thus obtained was a syrup at 20°C and deformed when an external force was applied, but did not return to the original shape even when the external force was removed.

### <Synthesis of specific plastomer (AP-4)>

Polyurethane AP-4 was obtained by the same method as for AP-3 except that the NOFABLE GO-991 was changed to 9.61 parts of Blemmer GLM (NOF Corporation).

The number-average molecular weight of the polymer thus obtained was 10,000. Furthermore, the ethylenically unsaturated group density was 0.82 mmol/g.

Moreover, the polymer thus obtained was a syrup at 20°C and deformed when an external force was applied, but did not return to the original shape even when the external force was removed.

### <Synthesis of comparative polymer (R-1)>

A separable flask equipped with a thermometer, a stirrer, and a reflux condenser was charged with 119.52 parts of the polycarbonate diol 'PCDL (registered trademark) L4672' (Asahi Kasei: number-average molecular weight 1,990, OH value 56.4) and 17.42 parts of Coronate T80 (Nippon Polyurethane Industry Co., Ltd.), and a reaction was carried out while heating at 80°C for about 3 hours, thus giving polyurethane R-1.

The number-average molecular weight of the polymer thus obtained was 10,000. Furthermore, the ethylenically unsaturated group density was 0 mmol/g.

Moreover, the polymer thus obtained was a syrup at 20°C and deformed when an external force was applied, but did not return to the original shape even when the external force was removed.

### <Synthesis of comparative polymer (R-2)>

A separable flask equipped with a thermometer, a stirrer, and a reflux condenser was charged with 59.76 parts of the polycarbonate diol 'PCDL (registered trademark) L4672' (Asahi Kasei: number-average molecular weight 1,990, OH value 56.4), 13.94 parts of 3-hexene-1,6-diol (Tokyo Chemical Industry Co., Ltd.), and 17.42 parts of Coronate T80 (Nippon Polyurethane Industry Co., Ltd.), and a reaction was carried out while heating at 80°C for about 3 hours, thus giving polyurethane R-2.

The number-average molecular weight of the polymer thus obtained was 10,000. Furthermore, the ethylenically unsaturated group density was 0.66 mmol/g.

Moreover, the polymer thus obtained was a syrup at 20°C and deformed when an external force was applied, but did not return to the original shape even when the external force was removed.

### <Synthesis of comparative polymer (R-3)>

A separable flask equipped with a thermometer, a stirrer, and a reflux condenser was charged with 119.52 parts of the polycarbonate diol 'PCDL (registered trademark) L4672' (Asahi Kasei: number-average molecular weight 1,990, OH value 56.4), and 17.42 parts of Coronate T80 (Nippon Polyurethane Industry Co., Ltd.), and a reaction was carried out while heating at 80°C for about 3 hours. Subsequently, 1.98 parts of 2-methacryloyloxyethyl isocyanate ('MOI', Showa Denko K.K.) was added, and a reaction was further carried out for about 3 hours, thus giving polyurethane R-3.

The number-average molecular weight of the polymer thus obtained was 10,000. Furthermore, the ethylenically unsaturated group density was 0.85 mmol/g.

Moreover, the polymer thus obtained was a syrup at 20°C and deformed when an external force was applied, but did not return to the original shape even when the external force was removed.

### <Synthesis of comparative polymer (R-4)>

A separable flask equipped with a thermometer, a stirrer, and a reflux condenser was charged with 59.76 parts of the polycarbonate diol 'PCDL (registered trademark) L4672' (Asahi Kasei: number-average molecular weight 1,990, OH value 56.4), 21.39 parts of NOFABLE GO-991 (NOF Corporation), and 17.42 parts of Coronate T80 (Nippon Polyurethane Industry Co., Ltd.), and a reaction was carried out while heating at 80°C for about 3 hours, thus giving polyurethane R-4.

The number-average molecular weight of the polymer thus obtained was 10,000. Furthermore, the ethylenically unsaturated group density was 0.61 mmol/g.

Moreover, the polymer thus obtained was a syrup at 20°C and deformed when an external force was applied, but did not return to the original shape even when the external force was removed.

### <Synthesis of comparative polymer (R-5)>

Polyurethane R-5 was obtained by the same method as for AP-3 except that the NOFABLE GO-991 was changed to 9.61 parts of Blemmer GLM (NOF Corporation).

The number-average molecular weight of the polymer thus obtained was 10,000. Furthermore, the ethylenically unsaturated group density was 0.69 mmol/g.

Moreover, the polymer thus obtained was a syrup at 20°C and deformed when an external force was applied, but did not return to the original shape even when the external force was removed.

The structural formulae of the starting material compounds used in the synthesis of the specific polymers and the comparative polymers are shown below. The symbols for the polymers that were synthesized and the starting material compounds are listed in Table 1.

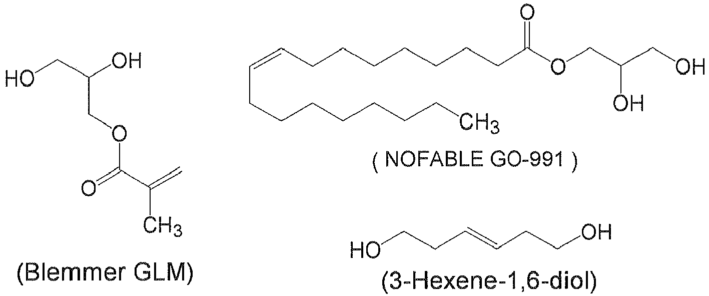

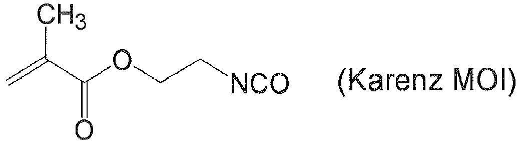

**(Table 1)**

| Polymer No. | Main chain skeleton | Diol forming main chain skeleton urethane structure | Isocyanate forming main chain skeleton urethane structure | Ethylenically unsaturated group position and compound for introduction | | | |
|---|---|---|---|---|---|---|---|
| | | | | Diol for interior of side chain | Diol for side chain terminal | Diol for interior of main chain | Isocyanate for main chain terminal |
| AP-1 | Polyurethane resin | 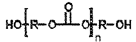 | 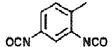 | 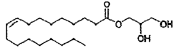 | - | 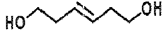 | - |
| | | PCDL L4672 | Coronate T80 | NOFABLE GO-991 | | 3-Hexene-1,6-diol | |
| AP-2 | Polyurethane resin | PCDL L4672 | Coronate T80 | - | 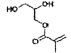 | 3-Hexene-1,6-diol | - |
| | | | | | Blemmer GLM | | |
| AP-3 | Polyurethane resin | PCDL L4672 | Coronate T80 | NOFABLE GO-991 | - | - | 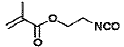 |
| | | | | | | | Karenz MOI |
| AP-4 | Polyurethane resin | PCDL L4672 | Coronate T80 | - | Blemmer GLM | - | Karenz MOI |
| R-1 (comparative) | Polyurethane resin | PCDL L4672 | Coronate T80 | - | | - - | - |
| R-2 (comparative) | Polyurethane resin | PCDL L4672 | Coronate T80 | - | - | 3-Hexene-1,6-diol | - |
| R-3 (comparative) | Polyurethane resin | PCDL L4672 | Coronate T80 | - | - | - | Karenz MOI |
| R-4 (comparative) | Polyurethane resin | PCDL L4672 | Coronate T80 | NOFABLE GO-991 | - | - | - |
| R-5 (comparative) | Polyurethane resin | PCDL L4672 | Coronate T80 | - | Blemmer GLM | - | - |

### (Example 1)

### 1. Preparation of resin composition for laser engraving

A three-necked flask equipped with a stirring blade and a condenser was charged with 70 parts of AP-1 as the specific plastomer (Component A), 2 parts of t-butylperoxybenzoate (product name: Perbutyl Z, NOF Corporation) as the polymerization initiator (Component B), 30 parts of Blemmer PDE-200 (NOF Corporation) as the (meth)acrylate compound (Component C), and 2 parts of Ketjen Black EC600JD (carbon black, Lion Corporation) as the photothermal conversion agent (Component D), and stirring was carried out at 40°C for 30 minutes. As a result of the above operations, flowable coating solution 1 for a crosslinkable relief-forming layer (resin composition 1 for laser engraving) was obtained.

### 2. Production of flexographic printing plate precursor for laser engraving

A spacer (frame) having a predetermined thickness was installed on a polyethylene terephthalate (PET) substrate, and the coating liquid for forming a crosslinkable relief-forming layer 1 obtained as described above was gently flow cast thereon so as not to flow out over the spacer (frame). Thereafter, the system was heated for 3 hours at 80°C and for another 3 hours at 100°C to thermally crosslink the relief-forming layer, and thus a relief-forming layer having a thickness of approximately 1 mm was provided. Thus, a flexographic printing plate precursor for laser engraving 1 was produced.

### 3. Production of flexographic printing plate

The relief-forming layer after crosslinking (crosslinked relief-forming layer) was engraved with the following two kinds of lasers.

As a carbon dioxide gas laser engraving machine, a high-resolution CO2 laser marker ML-9100 series (manufactured by Keyence Corp.) was used. A solid area which measured 1 cm on each of four sides was laser-engraved with the carbon dioxide laser engraving machine under the conditions of a power output of 12 W, a head speed of 200 mm/sec, and a pitch of 2,400 DPI.

As a semiconductor laser engraving machine, a laser recording apparatus equipped with a fiber-coupled semiconductor laser (FC-LD) SDL-6390 (manufactured by JDSU Corp., wavelength: 915 nm) having a maximum output power of 8.0 W was used. A solid area which measured 1 cm on each of four sides was laser-engraved with the semiconductor laser engraving machine under the conditions of a laser output power of 7.5 W, a head speed of 409 mm/sec, and a pitch of 2,400 DPI.

The thickness of the relief layer of the flexographic printing plate was approximately 1 mm.

### (Examples 2 to 8 and Comparative Examples 1 to 6)

### 1. Preparation of crosslinkable resin composition for laser engraving

Coating solutions for a crosslinkable relief-forming layer (crosslinkable resin compositions for laser engraving) 2 to 8 and comparative coating solutions for a crosslinkable relief-forming layer (crosslinkable resin compositions for laser engraving) 1 to 6 were prepared in the same manner as in Example 1 except that the specific plastomer (Component A), the polymerization initiator (Component B), the (meth)acrylate compound (Component C), and the photothermal conversion agent (Component D) used in Example 1 were changed to the specific plastomer (Component A), the polymerization initiator (Component B), the (meth)acrylate compound (Component C), and the photothermal conversion agent (Component D) shown in Table 2 below.

Details of the specific plastomer (Component A), the polymerization initiator (Component B), the (meth)acrylate compound (Component C), the photothermal conversion agent (Component D), and other additives used in each of the Examples and Comparative Examples are as follows.

### (Component A)

Polyurethane resin (AP-1): ref. synthetic example of polyurethane AP-1
Polyurethane resin (AP-2): ref. synthetic example of polyurethane AP-2
Polyurethane resin (AP-3): ref. synthetic example of polyurethane AP-3
Polyurethane resin (AP-4): ref. synthetic example of polyurethane AP-4
Comparative polymer (R-1): ref. synthetic example of polyurethane R-1
Comparative polymer (R-2): ref. synthetic example of polyurethane R-2
Comparative polymer (R-3): ref. synthetic example of polyurethane R-3
Comparative polymer (R-4): ref. synthetic example of polyurethane R-4
Comparative polymer (R-5): ref. synthetic example of polyurethane R-5

### (Component B)

Perbutyl Z: t-butylperoxybenzoate, NOF Corporation
V-601: dimethyl 2,2'-azobis(2-methylpropionate), Wako Pure Chemical
Industries, Ltd.
2,2-Dimethoxy-2-phenylacetophenone
Benzophenone
(Component C)
Blemmer PDE-200: polyethylene glycol dimethacrylate, NOF Corporation (Component D) photothermal conversion agent
Ketjen Black EC600JD: carbon black, Lion Corporation

### 2. Preparation of flexographic printing plate precursor for laser engraving

Flexographic printing plate precursors 2 to 8 for laser engraving of Examples and flexographic printing plate precursors 1 to 6 for laser engraving of Comparative Examples were obtained in the same manner as in Example 1 except that the coating solution 1 for a crosslinkable relief-forming layer in Example 1 was changed to coating solutions 2 to 8 for a crosslinkable relief-forming layer and comparative coating solutions 1 to 6 for a crosslinkable relief-forming layer.

### 3. Production of flexographic printing plate

In the same manner as in Example 1, the relief-forming layers of the flexographic printing plate precursors for laser engraving 2 to 8 of Examples and the flexographic printing plate precursors for laser engraving 1 to 6 of Comparative Examples were thermally crosslinked, and then the relief-forming layers thereof were engraved to form relief layers. Thereby, flexographic printing plates 2 to 8 of Examples and flexographic printing plates 1 to 6 of Comparative Examples were obtained.

The thickness of the relief layers of these flexographic printing plates was approximately 1 mm.

### 4. Evaluation of flexographic printing plate

Evaluation of performance in terms of printing durability and engraving depth of a flexographic printing plate was carried out as follows, and the results are given in Table 2.

### <Evaluation of Print durability>

The relief printing plates thus obtained from each Example and Comparative Example were mounted on a printing machine (ITM-4 type, manufactured by Iyo Kikai Seisakusho Co., Ltd.). Printing was continuously carried out by using an aqueous ink, AQUA SPZ16 Red (manufactured by Toyo Ink Group) as an ink, without diluting the ink, and by using Full-color Form, M 70 (manufactured by Nippon Paper Group, thickness: 100 mm) as a printing paper. Highlight percentage of 1% to 10% was confirmed on the printed material. The time point at which unprinted halftone dots were generated was defined as the termination of printing, and the length (m:meters) of printed paper until the termination of printing was used as an index. A larger value was evaluated to indicate superior print durability.

### <Measurement of engraving depth>

The 'engraving depth' of a relief layer obtained by laser engraving the crosslinked relief-forming layer of the flexographic printing plate precursor of each of the Examples and Comparative Examples was measured as follows. The 'engraving depth' referred to here means the difference between an engraved position (height) and an unengraved position (height) when a cross-section of the relief layer was examined. The 'engraving depth' in the present Examples was measured by examining a cross-section of a relief layer using a VK9510 ultradepth color 3D profile measurement microscope (Keyence). A large engraving depth means a high engraving sensitivity. The results are given in units of µm in Table 1 for each of the types of laser (carbon dioxide laser (CO₂ laser), fiber-coupled semiconductor laser (FC-LD)) used for engraving.

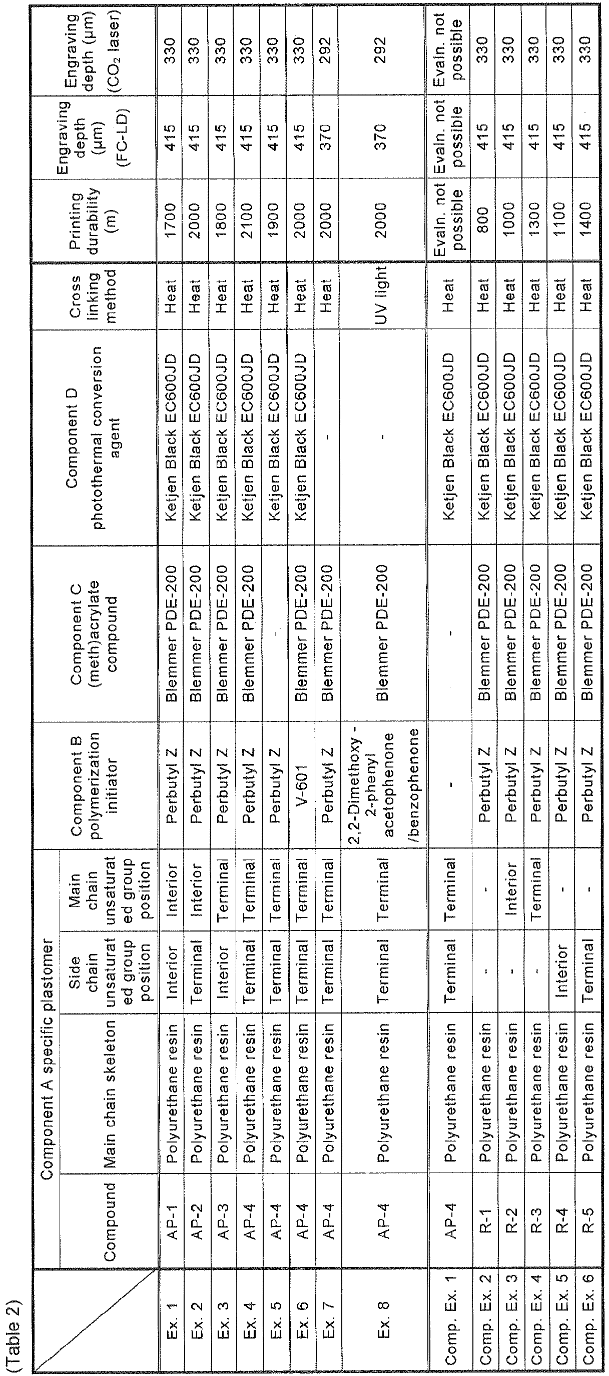

## Claims

1. A resin composition for laser engraving, comprising:
(Component A) a polyurethane resin that is a plastomer at 20°C and has an ethylenically unsaturated group in a main chain and a side chain; and
(Component B) a polymerization initiator.

2. The resin composition for laser engraving according to Claim 1, wherein Component A has an ethylenically unsaturated group at a side chain terminal.

3. The resin composition for laser engraving according to Claim 1 or 2, wherein Component A is a polyurethane resin obtained by a polyaddition reaction between (Component A-b) a diisocyanate compound and a diol selected from the group consisting of (Component A-a) a divalent or trivalent diol having no ethylenically unsaturated group, (Component A-c) a diol compound having an ethylenically unsaturated group at a molecular terminal, and (Component A-d) a diol compound having an ethylenically unsaturated group in the molecule and a hydroxy group at both molecular termini.

4. The resin composition for laser engraving according to Claim 3, wherein Component A-a is a polycarbonate diol.

5. The resin composition for laser engraving according to Claim 3, wherein Component A-c is Formula (a-c1) and/or Formula (a-c2), 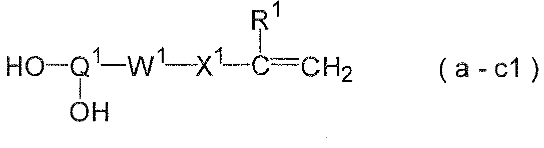 wherein in Formula (a-c1), R¹ denotes a hydrogen atom or a methyl group, X¹ denotes a single bond, a carbonyl group, an ester bond (-OC(O)-*), or an amide bond (-NHC(O)-*), W¹ denotes a divalent linking group selected from the group consisting of a single bond, an ether bond, an oxyalkylene group having 1 to 10 carbons, an alkylene group having 1 to 10 carbons, and an arylene group having 6 to 10 carbons, Q¹ denotes a trivalent linking group that is an aliphatic hydrocarbon group having 3 to 10 carbons, may be straight chain or branched, has one hydroxy group on each of at least two different carbon atoms, and has one single bond, and * denotes the position of bonding to the carbon atom of the ethylenically unsaturated group, 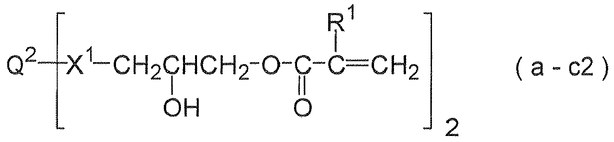 wherein in Formula (a-c2), R¹ denotes a hydrogen atom or a methyl group, X¹ denotes a single bond, a carbonyl group, an ester bond (-OC(O)-*), an ether bond (-O-), or an amide bond (-NHC(O)-*), * denotes a part bonding to Q², and Q² denotes a divalent organic residue having 3 to 30 carbons.

6. The resin composition for laser engraving according to Claim 3, wherein Component A-d is an alkenylene-α,ω-diol or an aromatic diisocyanate.

7. The resin composition for laser engraving according to any one of the Claims 1 to 6, wherein it further comprises (Component C) a (meth)acrylate compound.

8. The resin composition for laser engraving according to Claim 7, wherein Component C is an organic compound having a number-average molecular weight of less than 1,000 and having at least one to eight (meth)acryloyl groups per molecule.

9. The resin composition for laser engraving according to any one of Claims 1 to 8, wherein it further comprises (Component D) a photothermal conversion agent.

10. A flexographic printing plate precursor for laser engraving, comprising a relief-forming layer comprising the resin composition for laser engraving according to any one of Claims 1 to 9.

11. A flexographic printing plate precursor for laser engraving, according to Claim 10, wherein the relief-forming layer formed is crosslinked by means of light and/or heat.

12. A process for producing a flexographic printing plate precursor for laser engraving, comprising:
a layer formation step of forming a relief-forming layer comprising the resin composition for laser engraving according to any one of Claims 1 to 9; and
a crosslinking step of crosslinking the relief-forming layer by means of light and/or heat to thus obtain a flexographic printing plate precursor comprising a crosslinked relief-forming layer.

13. The process for producing a flexographic printing plate precursor for laser engraving according to Claim 12, wherein the crosslinking step is a step of crosslinking the relief-forming layer comprising the resin composition for laser engraving by means of heat to thus obtain a flexographic printing plate precursor comprising a crosslinked relief-forming layer.

14. A process for making a flexographic printing plate, comprising:
an engraving step of laser-engraving the flexographic printing plate precursor according to Claim 10 to thus form a relief layer.

15. A flexographic printing plate comprising a relief layer made by the process for making a flexographic printing plate according to Claim 14.

16. A process for making a flexographic printing plate, comprising:
a step of preparing a flexographic printing plate precursor comprising a coating step (1) of applying a resin composition comprising (Component A) a polyurethane resin that is a plastomer at 20°C and has an ethylenically unsaturated group in a main chain and a side chain and (Component B) a polymerization initiator onto a support by coating, and a curing step (2) of thermally curing the composition; and
a step of laser-engraving the flexographic printing plate precursor.
